(19) Europäisches Patentamt
European Patent Office
Office européen des brevets

(11) **EP 4 245 988 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **23161661.6**

(22) Anmeldetag: **14.03.2023**

(51) Internationale Patentklassifikation (IPC):
**F03D 7/02** (2006.01)     **F03D 7/04** (2006.01)

(52) Gemeinsame Patentklassifikation (CPC):
**F03D 7/028; F03D 7/0292; F03D 7/048;**
F05B 2270/1033; F05B 2270/109; F05B 2270/332;
F05B 2270/335

(54) **VERFAHREN ZUM BETREIBEN EINES MIT EINEM EXTERNEN STROMNETZ VERBINDBAREN WINDPARKS**

METHOD FOR OPERATING A WIND FARM WHICH CAN BE CONNECTED TO AN EXTERNAL POWER GRID

PROCÉDÉ DE FONCTIONNEMENT D'UN PARC ÉOLIEN POUVANT ÊTRE CONNECTÉ À UN RÉSEAU ÉLECTRIQUE EXTERNE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **18.03.2022 DE 102022106443**

(43) Veröffentlichungstag der Anmeldung:
**20.09.2023 Patentblatt 2023/38**

(73) Patentinhaber: **RWE Offshore Wind GmbH**
**45141 Essen (DE)**

(72) Erfinder: **SCHÖTTLE, Albrecht**
**25524 Itzehoe (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A2- 2 667 023     US-A1- 2013 038 060**

**Beschreibung**

Die Anmeldung betrifft ein Verfahren zum Betreiben eines mit einem externen Stromnetz verbindbaren (On- und/oder Offshore-) Windparks, wobei der Windpark zumindest eine erste Windkraftanlage und eine zweite Windkraftanlage umfasst. Das Verfahren ist insbesondere ein Regelverfahren. Darüber hinaus betrifft die Anmeldung einen Windpark, ein Computerprogramm und ein computerlesbares Speichermedium.

Zur Bereitstellung von elektrischer Energie werden vermehrt Erzeugungsanlagen verwendet, die auf den so genannten erneuerbaren Energien basieren. Ein Beispiel einer solchen Erzeugungsanlage ist eine Windkraftanlage. Eine Windkraftanlage ist eingerichtet zum Wandeln der kinetischen Windenergie in elektrische Energie.

Vorzugsweise kann in einem Windpark eine Mehrzahl von Windkraftanlagen angeordnet sein, die durch ein internes Stromnetz zusammengeschaltet sein können. Der Windpark kann über mindestens einen Windparkanschluss bzw. Netzanschluss verfügen. Der Netzanschluss dient dem Verbinden des Windparks bzw. des internen Stromnetzes des Windparks mit einem externen Stromnetz, wie ein öffentliches Stromnetz. Über den Netzanschluss wird die durch den Windpark, also durch sämtliche Windkraftanlagen des Windparks, generierte elektrische Leistung bzw. Energie in das externe Stromnetz eingespeist. Die von dem Windpark insgesamt generierte elektrische Leistung wird auch als Gesamtleistung des Windparks bezeichnet, die sich aus den durch die jeweiligen Windkraftanlagen generierten elektrischen Einzel-Leistungen zusammensetzt.

Ein grundliegendes Anliegen bei elektrischen Netzen besteht darin, das externe Stromnetz stabil zu halten. Dies meint insbesondere, dass sichergestellt wird, dass die in das externe Stromnetz insgesamt eingespeiste elektrische Leistung zu nahezu jedem Zeitpunkt im Wesentlichen der aus dem externen Stromnetz insgesamt entnommenen Leistung entspricht. Wenn also beispielsweise weniger Leistung aus dem externen Stromnetz entnommen wird, also weniger Leistung durch elektrische Verbraucher verbraucht wird, ist es erforderlich, die in das externe Stromnetz eingespeiste Leistung entsprechend zu reduzieren, um einem Schwarzfall des externen Stromnetzes zu verhindern.

Um dies sicherzustellen, kann eine Netzüberwachungsentität vorgesehen sein. Die Netzüberwachungsentität ist eingerichtet zum Generieren einer Leistungsanpassungsinstruktion, enthaltend zumindest eine vorgegebene maximal zulässige Gesamtleistung des Windparks. Unter der vorgegebenen maximal zulässigen Gesamtleistung des Windparks ist die elektrische Leistung bzw. Energie zu verstehen, die der Windpark an dem Netzanschluss in das externe Stromnetz maximal einspeisen darf.

Die Netzüberwachungsentität des Netzbetreibers ist insbesondere eingerichtet zum Übertragen der generierten Leistungsanpassungsinstruktion an den Windpark, insbesondere eine Windparksteuerung (auch als Windpark-Controller bezeichnet) des Windparks. Die Windparksteuerung ist eingerichtet zum Anpassen der durch den Windpark generierten (und in das externe Stromnetz eingespeisten) Gesamtleistung derart, dass die durch den Windpark in das externe Stromnetz eingespeiste Leistung die vorgegebene maximal zulässige Gesamtleistung nicht übersteigt bzw. überschreitet.

Aus dem Stand der Technik ist es bekannt, dass die Windparksteuerung bei Erhalt einer Leistungsanpassungsinstruktion pauschal jede Windkraftanlage um den gleichen Leistungsanpassungswert anpasst bzw. pauschal jede Windkraftanlage durch die Windparksteuerung entsprechend angesteuert wird. Wenn der Windpark beispielweise eine erste Windkraftanlage und eine zweite Windkraftanlage umfasst und die Leistungsanpassungsinstruktion eine Leistungsreduktion der generierten Gesamtleistung um 50 % vorgibt bzw. fordert, wird die durch die erste Windkraftanlage generierte Leistung auf 50 % reduziert und die durch die zweite Windkraftanlage generierte Leistung auf 50 % reduziert. So kann die Windparksteuerung entsprechende Sollwerte an die erste Windkraftanlage und die zweite Windkraftanlage übertragen bzw. mit entsprechenden Sollwerten ansteuern. Durch dieses bekannte Regelverfahren kann zwar sichergestellt werden, dass die Vorgaben des Netzbetreibers bzw. der Leistungsanpassungsinstruktion sicher erfüllt werden. Nachteilig ist jedoch, dass der Leistungsertrag des Windparks (insbesondere bezogen auf die Lebensdauer des Windparks) reduziert ist.

Ein weiteres bekanntes Regelverfahren ist in US 2013/038060 A1 offenbart.

Daher liegt der Anmeldung die Aufgabe zugrunde, ein (Regel-)Verfahren zum Betreiben eines mit einem externen Stromnetz verbindbaren Windparks bereitzustellen, bei dem die Nachteile des Stands der Technik reduziert werden und insbesondere der Gesamtenergieertrag des Windparks (insbesondere bezogen auf die Lebensdauer des Windparks) gesteigert wird.

Die Aufgabe wird gemäß einem ersten Aspekt der Anmeldung gelöst durch ein Verfahren, insbesondere ein Regelverfahren, nach Anspruch 1. Das Verfahren dient zum Betreiben eines Windparks, insbesondere zum Regeln der generierten elektrischen Leistung des Windparks. Der Windpark umfasst zumindest eine erste Windkraftanlage und eine zweite Windkraftanlage. Das Verfahren umfasst (die Schritte):

- Bereitstellen einer Mehrzahl von Zustandsparametern der ersten Windkraftanlage des Windparks,
- Bereitstellen einer Mehrzahl von Zustandsparametern der zweiten Windkraftanlage des Windparks,
- Generieren eines ersten Belastungsfaktors der ersten Windkraftanlage, basierend auf den bereitgestellten Zustandsparametern der ersten Windkraftanlage,

- Generieren eines zweiten Belastungsfaktors der zweiten Windkraftanlage, basierend auf den bereitgestellten Zustandsparametern der zweiten Windkraftanlage,
- Erhalten einer Leistungsanpassungsinstruktion, enthaltend zumindest eine vorgegebene maximal zulässige Gesamtleistung des Windparks, und
- Anpassen der durch den Windpark generierten Gesamtleistung durch Anpassen der ersten durch die erste Windkraftanlage generierten Einzel-Leistung, basierend auf dem generierten ersten Belastungsfaktor, und durch Anpassen der zweiten durch die zweite Windkraftanlage generierten Einzel-Leistung, basierend auf dem generierten zweiten Belastungsfaktor, derart, dass die durch dem Windpark in das externe Stromnetz eingespeiste Leistung die vorgegebene maximal zulässige Gesamtleistung nicht überschreitet.

Indem anmeldungsgemäß ein Regelverfahren bereitgestellt wird, bei dem bei Erhalt einer Leistungsanpassungsinstruktion die Windkraftanlagen des Windparks individuell geregelt werden, abhängig von ihrem jeweiligen (augenblicklichen) Belastungszustand, wird der Gesamtenergieertrag des Windparks gesteigert. So kann beispielsweise bei einer erforderlichen Gesamtleistungsreduktion insbesondere die Einzel-Leistung der ersten Windkraftanlage mit einem höheren (bzw. schlechteren) Belastungsfaktor stärker reduziert werden, als die Einzel-Leistung der zweiten Windkraftanlage mit einem niedrigeren (bzw. besseren) Belastungsfaktor.

Dies erhöht insbesondere die Lebensdauer der jeweiligen Windkraftanlagen des Windparks, so dass insbesondere der Leistungsertrag des Windparks insbesondere bezogen auf die Lebensdauer des Windparks gesteigert werden kann. Beispielsweise kann die erste Windkraftanlage gestoppt werden, während die zweite Windkraftanlage die maximal mögliche Leistung generiert, wenn der Belastungsfaktor der ersten Windkraftanlage zumindest höher ist als der Belastungsfaktor der zweiten Windkraftanlage. Insbesondere erfolgt anmeldungsgemäß bei einem Windpark ein anlagenzustandsorientiertes individuelles Regeln der Windkraftanlagen des Windparks.

Das anmeldungsgemäße Verfahren ist insbesondere ein Regelverfahren und dient der Leistungsregelung des Windparks. Ein anmeldungsgemäßer Windpark ist aus mindestens zwei Windkraftanlagen gebildet. Der Windpark kann ein Onshore-Windpark sein oder ein Offshore-Windpark. Bei einem Offshore-Windpark können die Windkraftanlagen über eine Gründungsstruktur (z.B. Monopile-, Tripod-, Tripile- oder Jacket-Gründungen) auf bzw. in dem Unterwasserboden, insbesondere einem Meeresboden, verankert sein. Alternativ oder zusätzlich können Offshore-Windkraftanlagen als schwimmfähige bzw. schwimmende Offshore-Windkraftanlagen gebildet sein. Eine schwimmfähige Offshore-Windkraftanlage kann mindestens ein schwimmfähiges Fundament mit mindestens einem Schwimmkörper aufweisen.

Die mindestens zwei Windkraftanlagen des Windparks sind über ein internes Stromnetz miteinander elektrisch verbunden. Das interne Stromnetz umfasst eine Mehrzahl von Energiekabeln. Das interne Stromnetz ist über einen Windparkanschluss bzw. Netzanschluss elektrisch mit einem externen Stromnetz verbunden. Das externe Stromnetz kann beispielsweise ein öffentliches Stromnetz sein. Das externe Stromnetz kann durch mindestens eine Netzüberwachungsentität des Netzbetreibers betrieben werden, insbesondere überwacht werden.

Der Windpark kann eine (zentrale) Windparksteuerung (auch als Windpark-Controller bezeichnet) aufweisen. Die Windparksteuerung kann in einer Windkraftanlage integriert sein oder in einem weiteren Bauwerk des Windparks (z.B. ein Umspannbauwerk oder einer entfernt angeordneten Zentrale). Die Windparksteuerung umfasst insbesondere einen Windparkregler bzw. Leistungsregler, eingerichtet zum Regeln der durch den Windpark generierten Gesamtleistung. Die generierte Gesamtleistung wird insbesondere in das externe Stromnetz über den Windparkanschluss eingespeist. Hierbei kann ein Teil der generierten Gesamtleistung zum Versorgen der internen Windparkverbraucher genutzt werden, so dass in der Praxis nur ein (großer) Teil der generierten Gesamtleistung in das externe Stromnetz eingespeist wird.

Anmeldungsgemäß wird von der ersten Windkraftanlage eine Mehrzahl von Zustandsparametern vorzugsweise der Windparksteuerung bereitgestellt. Insbesondere kann eine Sensoranordnung mit einer Mehrzahl von Sensoren in bzw. an der ersten Windkraftanlage angeordnet sein. Anmeldungsgemäß wird zudem von der zweiten Windkraftanlage eine Mehrzahl von Zustandsparametern vorzugsweise der Windparksteuerung bereitgestellt. Insbesondere kann eine Sensoranordnung mit einer Mehrzahl von Sensoren in bzw. an der zweiten Windkraftanlage angeordnet sein.

Ein Sensor kann eingerichtet sein zum (insbesondere zumindest nahezu kontinuierlichen) Erfassen eines Zustandsparameters. Die erfassten Zustandsparameterwerte eines Zustandsparameters können der Windparksteuerung (z.B. über ein Datennetz bzw. Kommunikationsnetz) bereitgestellt werden. Ein Zustandsparameter meint vorliegend insbesondere einen elektrischen oder mechanischen bzw. strukturellen Belastungsparameter einer Windkraftanlage, also einen Parameter, der sich auf die (augenblickliche) elektrische und/oder mechanische bzw. strukturelle Belastung einer Windkraftanlage (mittelbar oder unmittelbar) bezieht.

Basierend auf den zumindest zwei (unterschiedlichen) Zustandsparametern einer Windkraftanlage wird, vorzugsweise durch die Windparksteuerung, ein (augenblicklicher) Belastungsfaktor dieser Windkraftanlage generiert. Der Belastungsfaktor basiert insbesondere unmittelbar auf den zumindest zwei Zustandsparametern dieser Windkraftanlage. Ein Belastungsfaktor ist damit insbesondere eine Angabe über den (augenblicklichen) Belastungszustand der Windkraftanlage.

Anmeldungsgemäß werden ein erster Belastungsfaktor für die erste Windkraftanlage und ein zweiter Belastungsfaktor für die zweite Windkraftanlage generiert, insbesondere berechnet. Mit anderen Worten, wird insbesondere für jede Windkraftanlage des Windparks ein individuell für die jeweilige Windkraftanlage gültiger Belastungsfaktor generiert.

Im Normalbetrieb gibt es für die Einspeisung von elektrischer Leistung in das externe Stromnetz am Netzanschluss keine Restriktionen. Mit anderen Worten, die durch den Windpark generierte Gesamtleistung (abzüglich des Eigenverbrauchs) wird im Normalbetrieb in das externe Stromnetz eingespeist.

Wie bereits beschrieben wurde, kann es aufgrund einer erhaltenen Leistungsanpassungsinstruktion erforderlich sein, die durch den Windpark generierte Gesamtleistung anzupassen. Beispielsweise kann der Netzbetreiber bzw. die Netzüberwachungsentität des Netzbetreibers eine Leistungsanpassungsinstruktion generieren und an die Windparksteuerung (über ein Datennetz bzw. Kommunikationsnetz) übertragen.

Eine Leistungsanpassungsinstruktion enthält zumindest eine vorgegebene maximal zulässige Gesamtleistung des Windparks. Unter der vorgegebenen maximal zulässigen Gesamtleistung des Windparks ist die elektrische Leistung bzw. Energie zu verstehen, die der Windpark maximal an dem Windparkanschluss in das daran angeschlossene externe Stromnetz einspeisen darf.

Basierend auf der erhaltenen vorgegebenen maximal zulässigen Gesamtleistung des Windparks wird die durch den Windpark generierte Gesamtleistung angepasst bzw. geändert (also insbesondere reduziert (oder erhöht)). Die durch den Windpark generierte Gesamtleistung setzt sich aus den jeweils generierten Einzel-Leistungen der Windkraftanlagen des Windparks zusammen. Anmeldungsgemäß werden die Einzel-Leistungen bei Erhalt einer Leistungsanpassungsinstruktion nicht pauschal und gleich geändert, sondern individuell angepasst, abhängig von dem jeweiligen Belastungsfaktor, also insbesondere von dem jeweiligen Anlagenbelastungszustand.

So wird die erste Einzel-Leistung der ersten Windkraftanlage, insbesondere durch die Windparksteuerung, angepasst, abhängig von dem generierten ersten Belastungsfaktor der ersten Windkraftanlage. Zudem wird die zweite Einzel-Leistung der zweiten Windkraftanlage, insbesondere durch die Windparksteuerung, angepasst, abhängig von dem generierten zweiten Belastungsfaktor der zweiten Windkraftanlage.

Mit anderen Worten, die Anpassung, insbesondere Reduktion, der jeweiligen Einzel-Leistung der Windkraftanlagen erfolgt individuell und basiert insbesondere auf dem jeweiligen elektrischen und/oder mechanischen (bzw. strukturellen) Anlagenzustand bzw. Belastungszustand der jeweiligen Windkraftanlage. Dies bedeutet insbesondere, dass bei unterschiedlichen Belastungsfaktoren die Leistungsanpassung unterschiedlich stark erfolgt.

Insbesondere kann bei einer erforderlichen Leistungsreduktion die Einzel-Leistung einer ersten Windkraftanlage, die einen höheren Belastungszustand (und damit insbesondere einen höheren Belastungsfaktor als eine zweite Windkraftanlage hat, stärker reduziert werden als die Einzel-Leistung der zweiten Windkraftanlage. Dies umfasst insbesondere auch den Fall, dass die erste Windkraftanlage gestoppt wird, während bei der zweiten Windkraftanlage keine Leistungsreduktion erfolgt.

Die jeweiligen Einzel-Leistungen der ersten und zweiten Windkraftanlage werden in Summe derart angepasst bzw. geregelt, dass die durch den Windpark in das externe Stromnetz eingespeiste Leistung die vorgegebene maximal zulässige Gesamtleistung nicht überschreitet. Die vorgegebene maximal zulässige Gesamtleistung wird demnach an den Netzanschluss durch den Windpark eingehalten.

Gemäß einer Ausführungsform des anmeldungsgemäßen Verfahrens kann das Anpassen der durch den Windpark generierten Gesamtleistung ein Anpassen der generierten Gesamtleistung des Windparks um einen Leistungsanpassungsgesamtwert umfassen. Der Leistungsanpassungsgesamtwert kann ein Leistungsreduktionsgesamtwert sein. Der Leistungsanpassungsgesamtwert kann beispielsweise aus der augenblicklich in das externe Stromnetz (zulässiger Weise) eingespeiste Leistung und der vorgegebenen maximal zulässigen Gesamtleistung (insbesondere durch eine Differenzbildung) bestimmt werden.

Der Leistungsanpassungsgesamtwert wird auf einen ersten Einzel-Leistungsanpassungswert der ersten Windkraftanlage und einen zweiten Einzel-Leistungsanpassungswert der zweiten Windkraftanlage aufgeteilt. Ein Einzel-Leistungsanpassungswert kann ein Einzel-Leistungsreduktionswert sein. Die Aufteilung kann auf dem ersten Belastungsfaktor und dem zweiten Belastungsfaktor basieren. In einfacher Weise kann eine individuelle Anpassung bzw. Regelung der jeweiligen Einzel-Leistungen der Windkraftanlagen erfolgen, die die erforderliche Gesamtleistungsanpassung erfüllt.

Gemäß einer weiteren Ausführungsform des anmeldungsgemäßen Verfahrens kann der Windpark drei oder mehr Windkraftanlagen umfassen. Wie bereits beschrieben wurde, können sämtliche Windkraftanlagen über ein internes Stromnetz elektrisch (mittelbar (z.B. über eine weitere Windkraftanlage oder eine Umspannstation oder dergleichen) oder unmittelbar miteinander) elektrisch verbunden sein.

Für jede Windkraftanlage kann eine jeweilige Mehrzahl von Zustandsparametern erfasst werden. Für jede Windkraftanlage kann ein jeweiliger Belastungsfaktor generiert werden, jeweils basierend auf den jeweils erfassten Zustandsparametern. Das Anpassen bzw. Regeln der durch den Windpark generierten Gesamtleistung erfolgt durch ein Anpassen der jeweiligen Einzel-Leistung sämtlicher Windkraftanlagen des Windparks, jeweils basierend auf den jeweiligen Belastungsfaktoren, derart, dass die durch dem Windpark in das externe Stromnetz eingespeiste Leistung die vorgegebene maximal zulässige Gesamtleistung nicht überschreitet. Mit anderen Worten, vorzugsweise erfolgt eine individuelle Anpassung der jeweils generierten Einzel-Leistungen von sämtlichen Windkraftanlagen des Windparks, abhängig von dem jeweiligen elektrischen und/oder mechanischen Belastungszustand. Dies kann beispielsweise dazu führen, dass mindestens eine Windkraftanlage komplett abgestellt wird, mindestens eine Windkraftanlage auf 50 % reduziert wird und/oder mindestens eine Windkraftanlage ohne Leistungsreduktion weiter betrieben wird.

Das Anpassen der durch den Windpark generierten Gesamtleistung kann ein Ändern der generierten Gesamtleistung um einen Leistungsanpassungsgesamtwert umfassen, wie bereits beschrieben wurde. Der Leistungsanpassungsgesamtwert kann auf die jeweiligen Einzel-Leistungsanpassungswerte sämtlicher Windkraftanlagen des Windparks aufgeteilt werden. Die Aufteilung kann auf den jeweiligen Belastungsfaktoren sämtlicher Windkraftanlagen des Windparks basieren.

Erfindungsgemäß wird zusätzlich mindestens ein Bauteilzustandsparameter eines mit einer Windkraftanlage verbundenen Bauteils (z.B. ein Energiekabel, ein separater Umrichter etc.) des Windparks bereitgestellt. Das Bauteil ist als nicht Bestandteil der Windkraftanlage. Das Generieren des Belastungsfaktors für diese Windkraftanlage basiert erfindungsgemäß zusätzlich auf dem Bauteilzustandsparameter. Das weitere Bauteil kann unmittelbar oder mittelbar mit der Windkraftanlage verbunden sein. Dies kann beispielsweise durch eine Gewichtung berücksichtigt werden. Beispielsweise kann der Windpark mindestens einen Bauteilsensor umfassen, eingerichtet zum (zumindest nahezu kontinuierlichen) Erfassen des Bauteilzustandsparameters. Beispielsweise kann ein Temperatursensor vorgesehen sein, eingerichtet zum Erfassen der Kabeltemperatur eines Energiekabels.

Darüber hinaus kann, gemäß einer weiteren Ausführungsform des anmeldungsgemäßen Verfahrens, die Mehrzahl von Zustandsparametern zumindest einen Statuscode einer Windkraftanlage umfassen. Ein Statuscode ist ein interner Betriebszustand einer Windkraftanlage (der beispielsweise über ein SCADA-System des Windparks bereitgestellt werden kann). Ein Statuscode kann insbesondere einen Parameterwert aufweisen, ausgewählt aus der Gruppe, umfassend "Anlage in Ordnung", (manueller) Stopp der Anlage, Alarm und Warnung. Die augenblickliche Belastung ist insbesondere bei einem Stopp der Anlage hoch, während sie bei umfassend "Anlage in Ordnung" gering ist. Im ersten Fall wird insbesondere ein hoher Belastungsfaktor generiert, während in dem anderen Fall der Belastungsfaktor niedrig ist (dies gilt natürlich nur dann, wenn eine hohe Belastung einem hohen Belastungsfaktor entspricht und eine niedrige Belastung einem niedrigen Belastungsfaktor).

Gemäß einer weiteren Ausführungsform des anmeldungsgemäßen Verfahrens kann die Mehrzahl von Zustandsparametern zumindest einen an einer Windkraftanlage vorhandenen (insbesondere gemessenen) meteorologischen Parameter umfassen. Es ist erkannt worden, dass die augenblickliche Belastung einer Windkraftanlage von den (augenblicklichen) meteorologischen Umgebungsbedingungen an der Windkraftanlage abhängen kann. Der meteorologischen Parameter kann insbesondere eine Windgeschwindigkeit sein. Alternativ oder vorzugsweise zusätzlich kann der meteorologischen Parameter eine Windrichtung sein. Die tatsächliche augenblickliche Belastung einer Windkraftanlage kann mit einer noch höheren Präzision bestimmt werden.

Gemäß einer bevorzugten weiteren Ausführungsform des anmeldungsgemäßen Verfahrens kann die Mehrzahl von Zustandsparametern mindestens einen Komponentenzustandsparameter (auch als Gesundheitsindexparameter bzw. "health index parameter" bezeichnet) einer Windkraftanlage umfassen. Der mindestens eine Zustandsparameter gibt insbesondere den (augenblicklichen) Zustand der Komponente/Baugruppe der Windkraftanlage an.

Der mindestens eine Komponentenzustandsparameter kann ausgewählt sein aus der Gruppe, umfassend mindestens einen Rotorzustandsparameter, mindestens einen Getriebezustandsparameter, mindestens einen Generatorzustandsparameter, mindestens einen Umrichterzustandsparameter, mindestens einen Steuerungszustandsparameter (und/oder Regelungszustandsparameter), mindesten einen Triebstrangzustandsparameter und mindestens einen Turmzustandsparameter.

Es versteht sich, dass die Mehrzahl von Zustandsparametern weitere Komponentenzustandsparameter von weiteren Windkraftanlagenkomponenten umfassen kann. Insbesondere kann ein Komponentenzustandsparameter aus einer Mehrzahl von Einzelangaben gebildet sein, die sich auf eine jeweilige Windkraftanlagenkomponente beziehen. Eine Windkraftanlagenkomponente kann eine Bauteilgruppe der Windkraftanlage sein, die aus einer Mehrzahl von Subkomponenten bzw. Subbauteilen gebildet sein kann. Ein Komponentenzustandsparameter kann eine Mehrzahl von Subkomponentenzustandsparametern der jeweiligen Subkomponenten umfassen bzw. hieraus gebildet sein. Beispielsweise kann ein Generatorzustandsparameter einen Induktionsspulenzustandsparameter, einen Schleifringzustandsparameter, einen Antriebsachsenzustandsparameter etc. umfassen bzw. hieraus gebildet sein. Ein Turmzustandsparameter kann einen Turmfußzustandsparameter, einen mittleren Turmabschnittszustandsparameter und/oder einen oberen Turmabschnittzustandsparameter umfassen bzw. hieraus gebildet sein. In entsprechender Weise können die anderen Komponentenzustandsparameter gebildet sein. Ein Steuerungszustandsparameter kann aus einem Windrichtungsnachführungszustandsparameter, Pitchregelungszustandsparameter etc. gebildet sein. Es versteht sich, dass auch eine Subkomponente wieder aus einer Mehrzahl von Subkomponenten gebildet sein kann usw. Beispielsweise kann ein Windrichtungsnachführungszustandsparameter aus einem Stellmotorzustandsparameter, Sensorzustandsparameter etc. gebildet sein.

Bei Varianten der Anmeldung kann alternativ oder zusätzlich eine Clusterung in einen Zustandsparameter der elektrischen Windkraftanlagenkomponenten, einen Zustandsparameter der strukturellen Windkraftanlagenkomponenten und/oder einen Zustandsparameter der mechanischen Windkraftanlagenkomponenten erfolgen. Auch ein solcher Zustandsparameter kann eine Mehrzahl von Subkomponentenzustandsparametern umfassen bzw. hieraus gebildet sein.

Vorzugsweise kann die Mehrzahl von Zustandsparametern zumindest zwei der genannten Komponentenzustandsparameter umfassen, besonders bevorzugt drei oder mehr. Ein Komponentenzustandsparameter ist insbesondere eine Angabe über den (Belastungs-)Zustand (z.B. neuwertig, defekt etc.) einer Windkraftanlagenkomponente einer Windkraftanlage. Beispielhafte und nicht abschließende Windkraftanlagenkomponenten einer Windkraftanlage sind ein Flügel bzw. ein Rotorblatt, ein Getriebe, ein Generator, ein Umrichter und ein Turm.

Vorzugsweise kann der mindestens eine Komponentenzustandsparameter mindestens eine Defektart und/oder eine Defektgradangabe einer Windkraftanlagenkomponente umfassen. Die Defektgradangabe kann insbesondere den Grad (z.B. zwischen "Ausfall" und "kein Defekt") eines bestimmten Defekts bzw. einer bestimmten Defektart umfassen. Vorzugsweise zusätzlich kann die Defektart bzw. Typ gewichtet sein hinsichtlich seiner Relevanz für die Betriebsfähigkeit der Windkraftanlagenkomponente. Daher kann der Belastungsfaktor umso höher sein desto höher die Relevanz der Defektart für die Betriebsfähigkeit und/oder je höher der Defektgrad ist.

Alternativ oder zusätzlich kann der Komponentenzustandsparameter mindestens eine Komponentenausfallzeitangabe einer Windkraftanlagenkomponente umfassen. Unter einer Komponentenausfallzeitangabe ist eine Angabe über die voraussichtliche Ausfallzeit der Komponente bei einem tatsächlichen Effekt zu verstehen. Beispielsweise kann basierend auf historischen Ausfallzeitdaten die Komponentenausfallzeitangabe bestimmt werden. Zum Beispiel können Reparaturzeitangaben, Lieferungszeitangaben für ein Ersatzteil etc. berücksichtigt werden. Daher kann der Belastungsfaktor umso höher sein desto höher Komponentenausfallzeitangabe ist.

Alternativ oder zusätzlich kann der Komponentenzustandsparameter mindestens eine Komponentenreparaturangabe (die beispielsweise eine Reparaturkostenangabe umfassen kann) einer Windkraftanlagenkomponente umfassen. Daher kann der Belastungsfaktor umso höher sein desto höher Komponentenreparaturangabe ist.

Darüber hinaus kann, alternativ oder zusätzlich, der mindestens eine Komponentenzustandsparameter eine Restlebensdauerschätzung der Windkraftanlagenkomponente umfassen. Beispielsweise kann die Restlebensdauerschätzung geschätzt werden, basierend auf dem augenblicklichen Komponentenzustand, wie einer Defektgradangabe, und historischen Komponentendaten, wie die tatsächliche gemessen Restlebensdauer einer Komponenten ausgehend von einem zumindest ähnlichen Komponentenzustand. Ein prognostizierter baldiger Komponentenausfall (z.B. in den nächsten x Monaten) kann beispielsweise zu einem hohen Belastungszustand der Windkraftanlagenkomponente und insbesondere der Windkraftanlage führen. Daher kann der Belastungsfaktor umso höher sein desto höher die Wahrscheinlichkeit eines (baldigen) Ausfalls der Windkraftanlagenkomponente ist.

Gemäß einer weiteren bevorzugten Ausführungsform des anmeldungsgemäßen Verfahrens kann der mindestens eine Komponentenzustandsparameter mit einem Komponenten-Gewichtungsfaktor gewichtet sein. Der Komponenten-Gewichtungsfaktor kann insbesondere die Relevanz der Windkraftanlagenkomponente für die Betriebsfähigkeit (und/oder Stabilität) der Windenergieanlage (insgesamt) angeben (und/oder die HSE(Health and Safety Environment)-Relevanz der Windkraftanlagenkomponente). Beispielsweise kann der gewichtete Komponentenzustandsparameter(-wert) $x_n$ für die Komponente n eines Komponentenzustandsparameter(-werts) $y_n$ mittels der Formel (a) bestimmt werden

$$x_n = b_n * y_n \qquad\qquad (a)$$

wobei $b_n$ der Komponenten-Gewichtungsfaktor ist.

Zum Beispiel kann die Relevanz eines Außentemperatursensors einer Windkraftanlage für die Betriebsfähigkeit der Windkraftanlage als gering eingestuft werden. Der Komponenten-Gewichtungsfaktor dieser Windkraftanlagenkomponente kann daher gering sein. Dies hat beispielsweise zur Folge, dass der Belastungsfaktor gering ist, auch wenn ein baldiger Komplettausfall (z.B. innerhalb der nächsten zwei Wochen) des Außentemperatursensors droht.

Ferner kann zum Beispiel die Relevanz eines Flügels bzw. Rotorblatts als sehr hoch für die Betriebsfähigkeit der Windkraftanlage eingestuft werden. Der Komponenten-Gewichtungsfaktor dieser Windkraftanlagenkomponente kann daher hoch sein. Dies hat beispielsweise zur Folge, dass der Belastungsfaktor hoch ist, auch wenn erst in ferner Zukunft (z.B. > 1 Jahr) ein Ausfall eines Rotorblatts droht. Dies kann zur Folge haben, dass diese Windkraftanlage (bei Bedarf) gestoppt wird, während die Windkraftanlage mit dem defekten Außentemperatursensor ohne Leistungsreduktion weiterbetrieben wird.

Gemäß einer weiteren bevorzugten Ausführungsform des anmeldungsgemäßen Verfahrens kann die Mehrzahl von Zustandsparametern zumindest einen Windparkpositionsparameter einer Windkraftanlage umfassen. Insbesondere ist anmeldungsgemäß erkannt worden, dass die augenblickliche Belastung einer Windkraftanlage von dem Standort der Windkraftanlage in dem Windpark abhängen kann. Ein Windparkpositionsparameter gibt insbesondere die räumliche Anordnung der Windkraftanlage im Windpark an. Insbesondere können in einem Windpark aufgrund der Parkkonfiguration bei den Windkraftanlagen unterschiedliche Abschattungsverluste und/oder Turbulenzen auftreten. Einfluss auf den Belastungszustand haben auch Hindernisse, wie Wald, Hügel etc.

Beispielsweise erfährt eine erste Windkraftanlage an einem ersten Standort (z.B. ein zentraler bzw. mittiger Standort innerhalb des Windparks) höhere Turbulenzen verglichen mit einer zweiten an einem zweiten Standort (z.B. am Rand des Windparks) angeordnete Windkraftanlage. Der Belastungszustand der ersten Windkraftanlange kann daher als höher eingestuft werden als der Belastungszustand der zweiten Windkraftanlage. Dies hat beispielsweise zur Folge, dass der Belastungsfaktor der ersten Windkraftanlage höher ist als der Belastungsfaktor der zweiten Windkraftanlage. Dies kann zur Folge haben, dass die erste Windkraftanlage (bei Bedarf) gestoppt wird, während die zweite Windkraftanlage ohne Leistungsreduktion weiterbetrieben wird.

Insbesondere kann der Windparkpositionsparameter ein von einem meteorologischen Parameter abhängiger Parameter sein, wie der (augenblicklichen) Windstärke und/oder (augenblicklichen) Windrichtung. Beispielsweise können an einem Standort einer ersten Windkraftanlage erhöhte Turbulenzen (nur dann) auftreten, wenn der Wind aus einer ersten Windrichtung kommt, während die Turbulenzen an diesem Standort der ersten Windkraftanlage bei einer zweiten Windrichtung (die sich von der ersten Windrichtung beispielsweise um zumindest 45° unterscheidet, vorzugsweise zumindest 90°) geringer sind. Der Belastungszustand der ersten Windkraftanlange bei der ersten an der ersten Windkraftanlage vorhandenen (bzw. gemessenen) Windrichtung kann daher als höher eingestuft werden als der Belastungszustand der ersten Windkraftanlage bei der zweiten an der ersten Windkraftanlage vorhandenen (bzw. gemessenen) Windrichtung. Dies hat beispielsweise zur Folge, dass der (augenblickliche) Belastungsfaktor der ersten Windkraftanlage im ersten Fall höher ist als der (augenblickliche) Belastungsfaktor im zweiten Fall. Im ersten Fall kann der Betrieb der ersten Windkraftanlage gestoppt werden, während im zweiten Fall die erste Windkraftanlage ohne Leistungsreduktion weiterbetrieben werden kann.

Gemäß einer weiteren Ausführungsform des anmeldungsgemäßen Verfahrens kann die Mehrzahl von Zustandsparametern zumindest eine Altersangabe der Windkraftanlage (und/oder des verbundenen Bauteils, wie ein Energiekabel) sein und/oder die während der Lebensdauer der Windkraftanlage insgesamt bereits generierte Leistung. Der Belastungsfaktor kann umso höher sein desto älter die Windkraftanlage (und/oder das verbundene Bauteil) ist und/oder desto höher die insgesamt bereits generierte Leistung dieser Windkraftanlage ist.

Um eine umfassende Bewertung des (augenblicklichen) Belastungszustand einer Windkraftanlage vornehmen zu können, werden anmeldungsgemäß zumindest zwei, vorzugsweise drei oder mehr Zustandsparameter einer Windkraftanlage erfasst und die Generierung eines jeden Belastungsfaktors hierauf gestützt. Insbesondere kann die Generierung auf einem vorgegebenen Belastungsalgorithmus basieren. Ein Beispiel eines Belastungsalgorithmus ist die nachfolgende Formel (b)

$$F_B = a_1{}^*x_1 + a_2{}^*x_2 + ... a_m{}^*x_m \qquad\qquad (b)$$

wobei $F_B$ der generierte, insbesondere berechnete Belastungsfaktor, $x_1$ bis $x_m$ die jeweiligen Werte der Zustandsparameter, $a_m$ bis $a_m$ die jeweiligen Gewichtungsfaktoren sind für m Zustandsparameter. Ein Zustandsparameter $x_m$ kann beispielsweise ein gewichteter Komponentenzustandsparameter $x_n$ sein (siehe Formel (a). Es versteht sich, dass andere Algorithmen vorgesehen sein können.

Vorzugsweise kann, gemäß einer weiteren Ausführungsform des anmeldungsgemäßen Verfahrens, jedem Zustandsparameter ein Gewichtungsfaktor zugeordnet sein. Das Generieren eines Belastungsfaktors kann auf der Mehrzahl von Zustandsparametern und den jeweiligen Gewichtungsfaktoren (bzw. einer Mehrzahl von gewichteten Zustandsparametern) basieren. Die Genauigkeit der Bewertung des augenblicklichen Belastungszustands kann noch weiter verbessert werden.

Gemäß einem bevorzugten Gewichtungsfaktorschema kann insbesondere ein Gewichtungsfaktor eines Statuscodes größer sein als ein Gewichtungsfaktor eines meteorologischen Parameters. Vorzugsweise zusätzlich kann bei diesem Gewichtungsfaktorschema (aber auch alternativ) der Gewichtungsfaktor des meteorologischen Parameters größer sein als ein Gewichtungsfaktor eines Komponentenzustandsparameters. Vorzugsweise zusätzlich kann bei diesem Gewichtungsfaktorschema (aber auch alternativ) der Gewichtungsfaktor des Komponentenzustandsparameters größer sein als ein Gewichtungsfaktor eines Windparkpositionsparameters.

Gemäß einer besonders bevorzugten Ausführungsform des anmeldungsgemäßen Verfahrens kann der mindestens eine Belastungsfaktor ein normierter Belastungsfaktor $F_{BN}$ sein. Insbesondere kann der Skalierungsfaktor N der (augenblicklich erzielbare) Preis pro kWh sein:

$$F_{BN} = F_B/N \qquad\qquad (c)$$

Insbesondere ist erkannt worden, dass die Zustandsparameter und damit insbesondere ein Belastungsfaktor von dem augenblicklich erzielbaren Preis pro kWh abhängen kann. Insbesondere kann hierdurch eine Regelung der Leistung abhängig von den jeweiligen Stromgestehungskosten (auch "Levelized Cost of Electricity" (LCOE) genannt) der einzelnen Windkraftanlagen bereitgestellt werden.

Gemäß einer weiteren Ausführungsform des anmeldungsgemäßen Verfahrens kann das Generieren eines Belastungsfaktors auf der Mehrzahl von Zustandsparametern und zusätzlich auf mindestens einem vorhergesagten meteorologischen Parameter an einer Windkraftanlage basieren. Insbesondere kann hierdurch die zukünftige Belastung einer Windkraftanlage abgeschätzt werden. Ein vorhergesagter meteorologischer Parameter (z.B. eine (durchschnittliche) Windrichtung und/oder (durchschnittliche) Windstärke) kann von einem meteorologischen Dienstleister bereitgestellt werden.

Ein Belastungsfaktor kann, gemäß einer weiteren Ausführungsform des anmeldungsgemäßen Verfahrens, regelmäßig (z.B. alle x min, wie alle 15 min, alle 30 min etc.) und/oder vorzugsweise bei Detektion einer Änderung eines Zustandsparameterwerts erfolgen. Vorzugsweise kann ein Windpark eine Detektionseinrichtung (beispielsweise integriert in der Windparksteuerung) umfassen, eingerichtet zum Detektieren einer (vorgegebenen) Mindestabweichung zwischen einem augenblicklich bereitgestellten Zustandsparameterwerts und einem bereitgestellten vorherigen Zustandsparameterwert. Bei einer entsprechenden Detektion kann die Detektionseinrichtung eine erneute Bestimmung des Belastungsfaktors auslösen, bei dem der geänderte Zustandsparameterwert dann berücksichtigt wird.

Gemäß einer weiteren Ausführungsform des anmeldungsgemäßen Verfahrens kann die Leistungsanpassungsinstruktion die vorgegebene maximal zulässige Gesamtleistung des Windparks und einen vorgegebenen Anpassungszeitpunkt enthalten, ab der die in das externe Stromnetz durch den Windpark eingespeiste Leistung die vorgegebene maximal zulässige Gesamtleistung des Windparks einhalten muss. Das Verfahren kann umfassen:

- Bestimmen des durch den Windpark einzuhaltenden Leistungstoleranzbands der vorgegebene maximal zulässigen Gesamtleistung,
- Bestimmen des durch den Windpark einzuhaltenden Zeittoleranzbands des vorgegebenen Anpassungszeitpunkts, und
- Durchführen des Anpassens der durch den Windpark generierten Gesamtleistung unter Ausnutzung des Zeittoleranzbands und des Leistungstoleranzbands.

Insbesondere ist es im Stand der Technik üblich, die generierte Gesamtleistung derart anzupassen, dass die durch den Windpark in das externe Stromnetz eingespeiste Leistung exakt zum vorgegebenen Anpassungszeitpunkt die vorgegebene maximal zulässige Gesamtleistung einhält. Anmeldungsgemäß ist insbesondere erkannt worden, dass der Leistungsertrag gesteigert werden kann, wenn die vorhandenen Toleranzen, also insbesondere ein Leistungstoleranzband und/oder ein Zeittoleranzband, ausgenutzt bzw. ausgereizt werden.

Insbesondere kann ein Leistungstoleranzband bestimmt werden. Beispielsweise kann das Leistungstoleranzband angeben, dass Abweichungen von der vorgegebenen zulässigen Gesamtleistung $P_z$ von X % (z.B. 5 %) toleriert werden. Insbesondere meint ein Anpassen der durch den Windpark generierten Gesamtleistung unter Ausnutzung des Leistungstoleranzbands, dass die in das externe Stromnetz eingespeiste Leistung die Leistung $P_z$ + X % nicht überschreitet.

Insbesondere zusätzlich kann ein Zeittoleranzband bestimmt werden. Beispielsweise kann das Zeittoleranzband angeben, dass Abweichungen von dem vorgegebenen Anpassungszeitpunkt $T_a$ von X % (z.B. 5 %) toleriert werden. Insbesondere meint ein Anpassen der durch den Windpark generierten Gesamtleistung unter Ausnutzung des Zeittoleranzbands, dass die in das externe Stromnetz eingespeiste Leistung die maximal zulässige Leistung (insbesondere die Leistung $P_z$ + X %) erst zum Zeitpunkt $T_a$ + X % (bei einer erforderlichen Leistungsreduktion) nicht überschreitet. Wenn eine Leistungserhöhung erfolgen soll, kann diese zu dem frühestens möglichen Zeitpunkt ($T_a$ - X %) erfolgen. Der Leistungsertrag des Windparks kann noch weiter gesteigert werden.

Gemäß einer weiteren Ausführungsform des anmeldungsgemäßen Verfahrens kann, wenn die vorgegebene maximal zulässige Gesamtleistung null ist, der interne Energiebedarf des Windparks bestimmt werden. Das Anpassen der durch den Windpark generierten Gesamtleistung kann zusätzlich auf dem bestimmten internen Energiebedarf und einem vorgegebenen Energiekriterium basieren. Insbesondere kann vorgesehen sein, dass die durch den Windpark generierte Gesamtleistung den bestimmten internen Energiebedarf des Windparks (genau) abdeckt. Ein zusätzlicher Bezug von elektrischer Leistung kann entfallen.

Vorzugsweise kann durch das vorgegebene Energiekriterium festgelegt sein, unter welchen Bedingungen der interne Energiebedarf durch Bezug elektrischer Energie aus dem externen Stromnetz oder durch von dem Windpark generierte Leistung gedeckt wird. Beispielsweise kann das Energiekriterium festlegen, dass abhängig von dem Netzzustand des externen Stromnetz (beispielsweise bereitgestellt durch die Netzüberwachungsentität) Leistung aus dem externen Stromnetz zum Stabilisieren des externen Stromnetzes. Der Netzzustand kann beispielsweise durch Auswerten eines gemessenen (augenblicklichen) Netzparameters (z.B. Netzfrequenz, Netzspannung etc.) oder durch den (augenblicklichen) Preis pro kWh bestimmt werden. Der Preis pro kWh kann unmittelbar mit den Netzzustand zusammenhängen. Ist beispielsweise der für den Bezug der Leistung zu bezahlende Preis pro kWh geringer als die bei der Generierung der Leistung durch den Windpark anfallenden Kosten pro kWh, kann die Leistung für die internen Verbraucher aus dem externeren Stromnetz bezogen werden. Ansonsten kann der interne Leistungsbedarf durch eine Generierung der Leistung durch den Windpark abgedeckt werden. Die Stabilisierung des externen Stromnetzes kann unterstützt werden. Das Risiko eines Schwarzfalls kann reduziert werden.

Ein weiterer Aspekt der Anmeldung ist ein Computerprogramm gemäß Anspruch 14.

Ein weiterer Aspekt der Anmeldung ist ein computerlesbares Speichermedium, auf dem das zuvor beschriebene Computerprogramm gespeichert ist.

Ein noch weiterer Aspekt der Anmeldung ist ein Windpark gemäß Anspruch 15, insbesondere ein Offshore-Windpark. Der Windpark umfasst zumindest eine erste Windkraftanlage und eine zweite Windkraftanlage. Der Windpark umfasst mindestens einen Windparkanschluss zum Anschließen des Windparks an ein externes Stromnetz. Der Windpark umfasst mindestens eine Windparksteuerung eingerichtet zum:

- Generieren eines ersten Belastungsfaktors der ersten Windkraftanlage, basierend auf bereitgestellten Zustandsparametern der ersten Windkraftanlage,
- Generieren eines zweiten Belastungsfaktors der zweiten Windkraftanlage, basierend auf erfassten Zustandsparametern der zweiten Windkraftanlage,
- Erhalten einer Leistungsanpassungsinstruktion mit einer vorgegebenen maximal zulässigen Gesamtleistung des Windparks, und
- Anpassen der durch den Windpark generierten Gesamtleistung durch Anpassen der ersten durch die erste Windkraftanlage generierten Einzel-Leistung, basierend auf dem generierten ersten Belastungsfaktor, und durch Anpassen der zweiten durch die zweite Windkraftanlage generierten Einzel-Leistung, basierend auf dem generierten zweiten Belastungsfaktor, derart, dass die durch dem Windpark in das externe Stromnetz eingespeiste Leistung die vorgegebene maximal zulässige Gesamtleistung nicht überschreitet.

Ein zuvor beschriebenes Modul bzw. Element, insbesondere eine zuvor beschriebene Windparksteuerung, etc. kann zumindest teilweise Hardwareelemente (z.B. Prozessor, Speichermittel etc.) und/oder zumindest teilweise Softwareelemente (z.B. ausführbaren Code, insbesondere das genannte Computerprogramm) umfassen. Ferner sei angemerkt, dass Ausdrücke, wie "erster, zweiter etc." keine Reihenfolge angeben, sondern lediglich der unterschiedlichen Bezeichnung von Elementen (z.B. Windkraftanlagen) dienen.

Die Merkmale der Verfahren, Computerprogramme, Speichermedien und Windparks sind frei miteinander kombinierbar.

Es gibt nun eine Vielzahl von Möglichkeiten, das anmeldungsgemäße Verfahren, das anmeldungsgemäße Computerprogramm, das anmeldungsgemäße Speichermedium und den anmeldungsgemäßen Windpark auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1    eine schematische Ansicht eines Ausführungsbeispiels eines Windparks gemäß der vorliegenden Anmeldung, und

Fig. 2    ein Diagramm eines Ausführungsbeispiels eines Verfahrens gemäß der vorliegenden Anmeldung.

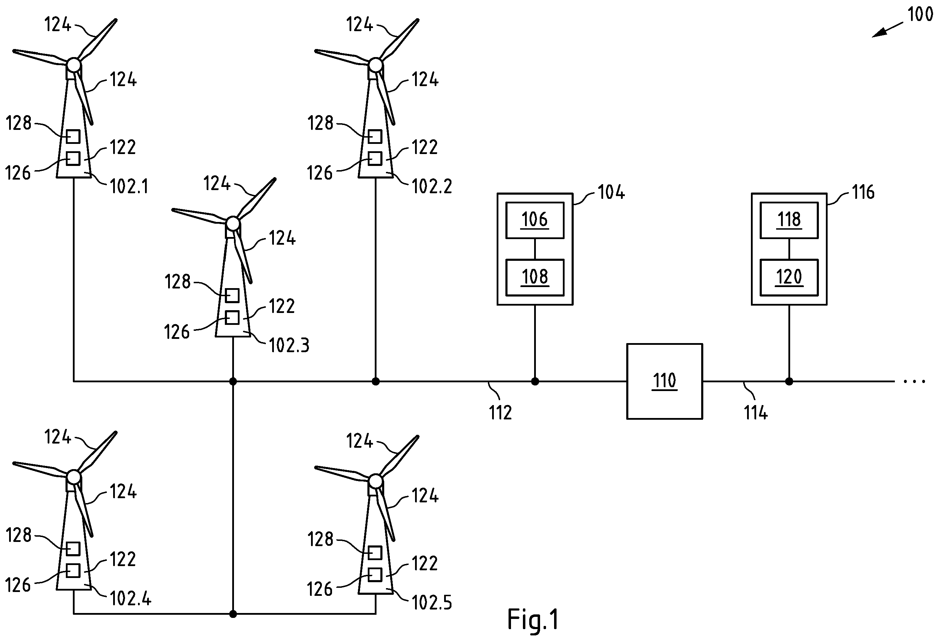

Die Figur 1 zeigt eine schematische Ansicht eines Ausführungsbeispiels eines Windparks 100 gemäß der vorliegenden Anmeldung. Der Windpark 100 kann ein Onshore-Windpark 100 oder ein Offshore-Windpark 100 sein.

Die mindestens zwei Windkraftanlagen 102.1 bis 102.5 (vorliegend sind lediglich beispielhaft fünf Windkraftanlagen 102.1 bis 102.5 dargestellt) können Onshore-Windkraftanlagen 102.1 bis 102.5 oder Offshore-Windkraftanlagen 102.1 bis 102.5 sein. Grundsätzlich ist auch eine Kombination von Onshore- und Offshore-Windkraftanlagen 102.1 bis 102.5 denkbar.

Eine Windkraftanlage 102.1 bis 102.5 ist eingerichtet zum Wandeln der kinetischen Energie des Winds in elektrische Energie. Eine Windkraftanlage 102.1 bis 102.5 ist insbesondere aus einer Mehrzahl von (Einzel-)Windkraftelementen gebildet, wie ein Turm 122, Rotorblätter 124 bzw. Flügel 124, ein Generator, ein Getriebe, ein Umrichter etc.

Wie ferner zu erkennen ist, umfasst der dargestellte Windpark 100 insbesondere ein internes Stromnetz 112. Ein internes Stromnetz 112 ist insbesondere aus einer Mehrzahl von elektrischen Energiekabeln gebildet. Das interne Stromnetz 112 verbindet die Windkraftanlagen 102.1 bis 102.5 insbesondere mit einem Windparkanschluss 110 bzw. einem Netzanschluss 110. Das interne Stromnetz 112 ist insbesondere eingerichtet zum Übertragen der durch die Windkraftanlagen 102.1 bis 102.5 generierten elektrischen Leistung bzw. Energie an den Windparkanschluss 110.

Darüber hinaus umfasst der Windpark 100 eine (zentrale) Windparksteuerung 104. Insbesondere kann die Windparksteuerung 104 in mindestens einer Rechenvorrichtung bzw. einem Computer implementiert sein. Es ist auch denkbar, dass ein verteiltes Rechnersystem mit einer Mehrzahl von vernetzten Computern vorgesehen ist.

Die dargestellte Windparksteuerung 104 umfasst mindestens einen Windparkregler 106 und mindestens eine Kommunikationseinrichtung 108. Es versteht sich, dass eine Windparksteuerung 104 über eine Vielzahl weiterer Module/Komponenten verfügen kann.

Der mindestens eine Windparkregler 106 ist insbesondere zum Regeln der durch den Windpark 100 generierten Gesamtleistung eingerichtet. Insbesondere ist der Windparkregler 106 eingerichtet zum Regeln der durch die jeweiligen Windkraftanlagen 102.1 bis 102.5 generierten Einzel-Leistungen, um die durch den Windpark 100 generierten Gesamtleistung zu regeln.

Die Windparksteuerung kann über die Kommunikationseinrichtung 108 und einem (nicht gezeigten) (drahtgebundenen und/oder drahtlosen) Kommunikationsnetz mit den Windkraftanlagen 102.1 bis 102.5 (bidirektional) kommunizieren bzw. Daten austauschen. Insbesondere kann die Windparksteuerung 104 zum Ansteuern der Windkraftanlagen 102.1 bis 102.5 vorgesehen sein. Beispielsweise kann die Windparksteuerung 104 Sollwerte, wie Leistungssollwerte oder dergleichen, vorgeben, insbesondere individuelle Sollwerte für jede Windkraftanlage 102.1 bis 102.5. Eine lokale Steuerung 126, insbesondere ein lokaler Regler 126, einer Windkraftanlage 102.1 bis 102.5 kann insbesondere eingerichtet sein, die durch die jeweilige Windkraftanlage 102.1 bis 102.5 erzeugte Einzel-Leistung entsprechend dem mindestens einen vorgegebenen Sollwert zu steuern, insbesondere zu regeln.

Wie ferner aus der Figur 1 zu erkennen ist, ist der dargestellte Windpark 100 mit mindestens einem externen Stromnetz 114 (z.B. ein (öffentliches) Hoch- oder Mittelspannungsnetz) verbunden. Die durch den Windpark 100 generierte Gesamtleistung kann (zumindest überwiegend) in das externe Stromnetz 114 eingespeist werden. Es versteht sich, dass ein Teil der generierten Gesamtleistung zum Versorgen von internen elektrischen Verbrauchern (inklusive der in der Praxis auftretenden Verluste) des Windparks 100 verwendet werden kann.

Ferner kann eine Netzüberwachungsentität 116 vorgesehen sein. Die Netzüberwachungsentität 116 kann in einer weiteren Rechenvorrichtung bzw. in einem weiteren Computer implementiert sein. Die Netzüberwachungsentität 116 eines Netzbetreibers des externen Stromnetzes 114 kann beispielsweise ein Überwachungsmodul 118 zum Überwachen des Netzzustands des externen Stromnetzes 114 umfassen, beispielsweise basierend auf gemessenen Netzparametern des externen Stromnetzes 114, wie Netzfrequenz, Netzspannung etc.

Ferner kann die Netzüberwachungsentität 116 mindestens eine weitere Kommunikationseinrichtung 118 umfassen. Die weitere Kommunikationseinrichtung 118 der Netzüberwachungsentität 116 kann insbesondere eingerichtet sein zum Kommunizieren, über ein nicht gezeigtes weiteres (drahtloses und/oder drahtgebundenes) Kommunikationsnetz, mit der Kommunikationseinrichtung 108 der Windparksteuerung 104.

Die Kommunikationseinrichtung 108 der Windparksteuerung 104 ist insbesondere eingerichtet zum Erhalten einer Leistungsanpassungsinstruktion, die beispielsweise durch die Kommunikationseinrichtung 118 der Netzüberwachungsentität 116 ausgesendet werden kann. Eine Leistungsanpassungsinstruktion kann bei Varianten der Anmeldung auch von einer anderen Quelle ausgesendet werden.

Eine Leistungsanpassungsinstruktion enthält zumindest eine vorgegebene maximal zulässige Gesamtleistung des Windparks 100 und vorzugsweise zusätzlich einen vorgegebenen Anpassungszeitpunkt, ab dem die vorgegebenen maximal zulässige Gesamtleistung durch den Windpark 100 an dem Windparkanschluss 110 einzuhalten ist. Die vorgegebene maximal zulässige Gesamtleistung gibt insbesondere die elektrische Leistung vor, die durch den Windpark 100 über den Windparkanschluss 110 maximal in das externe Stromnetz 114 (insbesondere ab dem vorgegebenen Anpassungszeitpunkt) eingespeist werden darf. Beispielsweise kann der Netzzustand des externen Stromnetzes 114 eine Reduktion der durch den Windpark 100 eingespeisten Leistung erfordern, um zum Beispiel einen Schwarzfall zu verhindern.

Anmeldungsgemäß werden eine Mehrzahl von Zustandsparametern einer ersten Windkraftanlage 102.1 und eine Mehrzahl von Zustandsparametern einer zweiten Windkraftanlage 102.2 der zumindest zwei Windkraftanlagen 102.1 bis 102.5 des Windparks 100 bereitgestellt, insbesondere der Windparksteuerung 104.

Vorzugsweise wird von jeder Windkraftanlage 102.1 bis 102.5 des Windparks 100 jeweils eine Mehrzahl von Zustandsparametern bereitgestellt. Hierzu kann insbesondere jede Windkraftanlage 102.1 bis 102.5 eine Sensoranordnung 128 aufweisen. Die Sensoranordnung 128 kann eine Mehrzahl von Sensoren umfassen. Ein Sensor kann eingerichtet sein zum Erfassen eines Zustandsparameters und/oder eines Parameters, aus dem ein Zustandsparameter abgeleitet und/oder berechnet werden kann. Beispielhafte und nicht abschließende Sensoren sind Drucksensoren, Dehnungsmessstreifen, Thermometer, Beschleunigungssensoren, Spannungsmesser, Strommesser, Windgeschwindigkeitsmesser, Windrichtungsmesser etc.

Darüber hinaus kann der Windpark 100 weitere (nicht gezeigte) Messeinrichtungen aufweisen, wie beispielsweise (separate) meteorologische Messeinrichtungen (z.B. Messmasten), beispielsweise eingerichtet zum Messen der Windstärke und/oder Windrichtung in der (unmittelbaren) Umgebung der einzelnen Windkraftanlagen 102.1 bis 102.5.

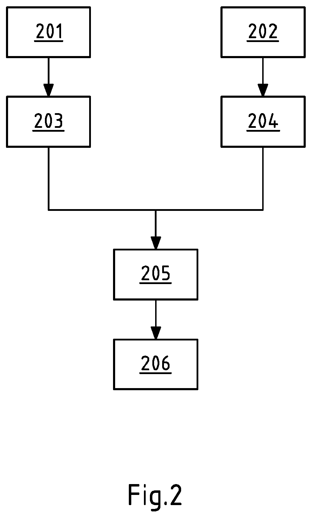

Der Betrieb eines Windparks 100 bzw. die Leistungsregelung bei einem Windpark 100 wird nachfolgend beispielhaft mit Hilfe der Figur 2 näher beschrieben. Die Figur 2 zeigt ein Diagramm eines Ausführungsbeispiels eines Verfahrens, insbesondere eines Regelverfahrens, gemäß der vorliegenden Anmeldung.

In Schritt 201 kann eine Mehrzahl von Zustandsparametern einer ersten Windkraftanlage 102.1 und in Schritt 202 kann eine Mehrzahl von Zustandsparametern einer zweiten Windkraftanlage 102.2 der zumindest zwei Windkraftanlagen 102.1 bis 102.5 des Windparks 100 bereitgestellt werden. Wie in der Figur 2 angedeutet ist, können diese Schritte 201, 202 zumindest teilweise parallel durchgeführt werden. Wie bereits beschrieben wurde, kann vorzugsweise von jeder Windkraftanlage 102.1 bis 102.5 des Windparks 100 jeweils eine Mehrzahl von Zustandsparametern in entsprechenden (nicht dargestellten) Schritten bereitgestellt werden.

Ein Bereitstellen einer Mehrzahl von Zustandsparametern einer Windkraftanlage 102.1 bis 102.5 kann ein Erfassen, insbesondere ein Messen, der Zustandsparameter durch mindestens eine Sensoranordnung 128 umfassen. Optional kann mindestens ein Bauteilzustandsparameter (z.B. von einem angeschlossenen Energiekabel) bereitgestellt werden, wie beschrieben wurde.

Als ein Zustandsparameter einer Windkraftanlage 102.1 bis 102.5 kann insbesondere ein Statuscode der Windkraftanlage 102.1 bis 102.5 (kontinuierlich) erfasst und bereitgestellt werden. Insbesondere kann für jede Windkraftanlage 102.1 bis 102.5 des Windparks 100 der Windparksteuerung 104 mitgeteilt werden, ob die "Anlage in Ordnung" ist oder ob ein (manueller) Stopp der Anlage, ein Alarm und/oder eine Warnung vorliegt.

Vorzugsweise zusätzlich kann als weiterer Zustandsparameter die (durchschnittliche und/oder maximale) Windgeschwindigkeit und/oder die (durchschnittliche) Windrichtung an einer Windkraftanlage 102.1 bis 102.5 (kontinuierlich) erfasst, beispielsweise durch die Sensoranordnung 128 und/oder zusätzliche Messeinrichtungen, und insbesondere bereitgestellt werden.

Ferner kann insbesondere zusätzlich als weiterer Zustandsparameter mindestens ein Komponentenzustandsparameter einer Windkraftanlagenkomponente 122, 124 einer jeweiligen Windkraftanlage 102.1 bis 102.5 (kontinuierlich) erfasst, beispielsweise durch die Sensoranordnung 128, und insbesondere bereitgestellt werden.

Insbesondere kann eine Mehrzahl von Komponentenzustandsparameter einer Mehrzahl von Komponentenzustandsparametern bereitgestellt werden. Beispielhaft kann ein Turmzustandsparameter des jeweiligen Turms 122 und ein Rotorzustandsparameter der jeweiligen Flügel 124 bzw. Rotorblätter 124 einer jeweiligen Windkraftanlage 102.1 bis 102.5 bereitgestellt werden. Wie beschrieben wurde, können weitere Komponentenzustandsparameter bereitgestellt werden. Wie ebenfalls beschrieben wurde, kann ein Komponentenzustandsparameter eine Mehrzahl von Angaben (z.B. Defektgradangabe, Komponentenausfallzeitangabe, Komponentenreparaturangabe, Restlebensdauerschätzung) umfassen und/oder hieraus gebildet sein. Ferner kann ein Komponentenzustandsparameter ein gewichteter Komponentenzustandsparameter sein, insbesondere abhängig von der jeweiligen Relevanz der jeweiligen Windkraftanlagenkomponente 122, 124 für die Betriebsfähigkeit der Windkraftanlage 102.1 bis 102.5 (vgl. Formel (a)).

Zudem kann insbesondere zusätzlich als weiterer Zustandsparameter ein Windparkpositionsparameter einer Windkraftanlage 102.1 bis 102.5 bereitgestellt werden. Beispielsweise kann der Windparkpositionsparameter eine Angabe über die Position der jeweiligen Windkraftanlage 102.1 bis 102.5 in Relation zu den übrigen Windkraftanlagen 102.1 bis 102.5 (z.B. Windkraftanlage 102.3 ist zentral bzw. mittig positioniert, Windkraftanlagen 102.1, 102.2, 102.4, 102.5 sind am Rand des Windparks positioniert, insbesondere am nördlichen, südlichen, westlichen, östlichen Rand des Windparks), eine geographische Angabe (z.B. GPS-Koordinaten oder dergleichen) und/oder ein Angabe in Bezug zu Hindernissen (z.B. Wald, Hügel, Gebäude etc.) der Umgebung umfassen.

Auch können als Zustandsparameter das Alter von Windkraftanlagen 102.1 bis 102.5, einzelnen Windkraftanlagenkomponenten 122, 124, die bisher durch eine Windkraftanlage 102.1 bis 102.5 erzeugte Gesamtleistung, den Windkraftanlagentyp etc. bereitgestellt werden.

Wie beschrieben wurde, können weitere Daten, wie meteorologische Vorhersagedaten (z.B. bezüglich der (durchschnittlichen und/oder maximalen) Windgeschwindigkeit und/oder der (durchschnittlichen) Windrichtung an einer Windkraftanlage 102.1 bis 102.5) bereitgestellt werden.

In einem Schritt 203 erfolgt, insbesondere durch die Windparksteuerung 104, ein Generieren eines ersten Belastungsfaktors der ersten Windkraftanlage 102.1, basierend auf den bereitgestellten Zustandsparametern der ersten Windkraftanlage 102.1 und in Schritt 204 ein Generieren, insbesondere durch die Windparksteuerung 104, eines zweiten Belastungsfaktors der zweiten Windkraftanlage102.2, basierend auf den bereitgestellten Zustandsparametern der zweiten Windkraftanlage 102.2. Wie in der Figur 2 angedeutet ist, können diese Schritte 203, 204 zumindest teilweise parallel durchgeführt werden. Wie bereits beschrieben wurde, kann vorzugsweise für jede Windkraftanlage 102.1 bis 102.5 des Windparks 100 jeweils ein Belastungsfaktor, insbesondere durch die Windparksteuerung 104, generiert werden. Die Generierung kann, wie beschrieben, beispielsweise unter Nutzung der Formel (b) durchgeführt werden.

Ein Belastungsfaktor kann beispielsweise regelmäßig (z.B. alle x min, wie alle 15 min) und/oder vorzugsweise bei Detektion einer Änderung eines Zustandsparameterwerts erfolgen. Vorzugsweise kann der Windpark 100 eine (nicht gezeigte) Detektionseinrichtung umfassen, eingerichtet zum Detektieren einer (vorgegebenen) Mindestabweichung eines bereitgestellten Zustandsparameterwerts von einem bereitgestellten vorherigen Zustandsparameterwert. Bei einer entsprechenden Detektion kann die Detektionseinrichtung eine erneute Bestimmung des Belastungsfaktors auslösen, bei dem der geänderte Zustandsparameterwert dann berücksichtigt wird. Anders ausgedrückt, die Schritte 201 bis 204 (und ggf. weitere Schritte für weitere Windkraftanlagen) können regelmäßig oder bei Eintritt eines bestimmten Ereignisses (also die genannte Detektion) erneut durchgeführt werden.

In Schritt 205 erfolgt ein Erhalten, insbesondere durch die Windparksteuerung 116, einer Leistungsanpassungsinstruktion, die zumindest eine vorgegebene maximal zulässige Gesamtleistung des Windparks 100 und vorzugsweise zusätzlich einen vorgegebenen Anpassungszeitpunkt enthält, ab dem die vorgegebene maximal zulässige Gesamtleistung durch den Windpark 100 einzuhalten ist.

Bei Erhalt einer Leistungsanpassungsinstruktion erfolgt in Schritt 206, durch die Windparksteuerung 104, insbesondere dem Windparkregler 106, ein Anpassen der durch den Windpark 100 generierten Gesamtleistung durch Anpassen der ersten durch die erste Windkraftanlage 102.1 generierten Einzel-Leistung, basierend auf dem generierten ersten Belastungsfaktor, und durch Anpassen der zweiten durch die zweite Windkraftanlage 102.2 generierten Einzel-Leistung, basierend auf dem generierten zweiten Belastungsfaktor, derart, dass die durch dem Windpark 100 in das externe Stromnetz 114 eingespeiste Leistung die vorgegebene maximal zulässige Gesamtleistung nicht überschreitet. Insbesondere erfolgt ein Anpassen der durch den Windpark 100 generierten Gesamtleistung durch ein Anpassen der jeweiligen Einzel-Leistung sämtlicher Windkraftanlagen 102.1 bis 102.5 des Windparks 100, jeweils basierend auf den jeweiligen Belastungsfaktoren, derart, die durch dem Windpark 100 in das externe Stromnetz 114 eingespeiste Leistung die vorgegebene maximal zulässige Gesamtleistung nicht überschreitet.

Insbesondere kann ein von bestimmten Belastungsfaktoren abhängiger Regelungsalgorithmus in der Windparksteuerung vorgegeben sein. Der Regelungsalgorithmus kann insbesondere stufenweise angeben (abhängig von der vorgegebenen maximal zulässigen Gesamtleistung), welche Einzel-Leistung eine Windkraftanlagen 102.1 bis 102.5 generiert, wenn der Belastungsfaktor in einem bestimmten Belastungsfaktorbereich liegt. Insbesondere kann eine Mehrzahl von Belastungsfaktorbereichen vorgegeben sein, wobei jedem Belastungsfaktorbereich eine Leistungsangabe zugeordnet sein kann. Insbesondere kann mindestens eine Zuordnungstabelle oder dergleichen vorgegeben sein. Beispielsweise kann einem hohen Belastungsbereich die Leistungsangabe 0 % zugeordnet sein (Anlage wird gestoppt), einem weiteren Belastungsfaktorbereich die Leistungsangabe 50 % (Anlage wird auf 50 % der Nennleistung reduziert) und einem weiteren Belastungsfaktorbereich die Leistungsangabe 100 % (Anlage wird ohne Leistungsreduktion weiterbetrieben).

Es versteht sich, dass weitere Bereich vorgesehen sein können und/oder diese Bereiche sich abhängig von der vorgegebenen maximal zulässigen Gesamtleistung ändern können. Ferner kann bei anderen Varianten eine stufenlose Regelung vorgesehen sein.

Besonders bevorzugt erfolgt das Anpassen unter Ausnutzung bzw. Ausreizung eines Leistungstoleranzbands und/oder Zeittoleranzbands (wie beschrieben wurde).

Nachfolgend werden noch weitere bevorzugte Ausführungsbeispiele beschrieben, die miteinander kombiniert werden können.

Das anmeldungsgemäße Verfahren, insbesondere der anmeldungsgemäße Regelungsalgorithmus, der in einem Windparkregler implementiert sein kann, kann insbesondere dem Prinzip der maximalen Leistungsabgabe des gesamten Windparks und dem aktuellen Preis der erzeugten Energie/kWh jeder einzelnen Windkraftanlage, um primär nicht zu jedem Zeitpunkt eine maximale Leistungsabgabe zu erhalten, sondern einen maximalen Ertrag des gesamten Windparks. Insbesondere wird jede einzelne Windkraftanlage nicht als Einzelanlage, sondern im Kontext aller Windkraftanlage des Windparks betrachtet. Das bedeutet insbesondere, dass auch der Einfluss aller Windkraftanlagen untereinander berücksichtigt wird (z.B. Turbulenzen bei bestimmten Windrichtungen). Natürlich können bei einem solchen Regelalgorithmus auch verschiedene Windkraftanlagen berücksichtigt werden. Insbesondere bei Windkraftanlagen mit einer so genannten Vollumrichtertechnik kann mit einer solchen intelligenten Windpark-Regelung ein hoher positiver Einfluss auf die LCoE bzw. Wirtschaftlichkeit erzielt werden.

Beispielsweise kann es im Fall einer netzbedingt erforderlichen Leistungsreduzierung eines Windparks aus technischer, aber auch aus wirtschaftlicher Sicht, sinnvoll sein, einzelne Windkraftanlagen im Zentrum des Windparks aufgrund höherer Turbulenzen (=> höhere Lasten => höheres Ausfallrisiko => höhere Servicekosten) abzuschalten und andere Windkraftanlagen, die sich (bei der augenblicklich gemessenen Windrichtung) vor dem Wind befinden, ohne Leistungsabstriche zu betreiben.

Ferner kann es beispielsweise abhängig von den Regelungen und Pönalen im Netzanschlussvertrag aus wirtschaftlicher Sicht sinnvoll sein, den Signalen bzw. der Leistungsanpassungsinstruktion (z.B. Abschaltung oder Leistungsreduzierung) des Netzbetreibers nicht so früh wie technisch möglich zu folgen, sondern so spät wie es die vertraglichen Toleranzen erlauben. Zusätzlich kann es Toleranzen für die von dem Windpark einzuhaltenden Leistungswerte geben. Diese Toleranzen können bestimmt werden und im Regelungsverfahren bzw. Regelungsalgorithmus implementiert werden. Dann kann der Windpark am oberen Rand des Toleranzbandes geregelt werden, ohne dass z.B. Vertragsstrafen durch den Netzbetreiber drohen. Insbesondere kann der Regelungszeitpunkt und -höhe im Rahmen des anmeldungsgemäßen Verfahrens bzw. Regelungsalgorithmus optimiert werden.

Die Spezifikationen der Datenübertragung zwischen z.B. Netzbetreiber und Windparksteuerung können in verschiedenen Normen und Standards der einzelnen Länder geregelt sein. Diese Vorschriften können immer Vorrang haben. Diese Datenübermittlung kann daher in der Regel nicht beeinflusst werden. Hierbei können sich die Vorgaben des Netzbetreibers (also insbesondere die maximal zulässige Gesamtleistung) immer auf den (vertraglich) definierten Windparkanschluss bzw. Netzverknüpfungspunkt beziehen. Die Regelung kann daher auch nach den Sollwerten dieses Netzverknüpfungspunktes erfolgen. Das bedeutet insbesondere, wenn der Netzbetreiber z.B. 0 kW zulässige Einspeisung am Netzverknüpfungspunkt vorgibt, der Windparkregler beispielsweise die einzelnen Windenergieanlagen so regelt, dass der Eigenverbrauch aller Windkraftanlagen, einschließlich Transformator- und Kabelverlusten, weiterhin von der/den Windkraftanlagen produziert wird und nicht alle Windkraftanlagen auf 0 kW abgeschaltet werden.

Die folgenden Eingangsparameter können, wie beschrieben, der Windparksteuerung als Zustandsparameter von vorzugsweise jeder einzelnen Windkraftanlage zur Verfügung gestellt werden. Die Windparksteuerung kann beispielsweise den aktuellen kWh-Preis pro Windkraftanlage berechnen und in der Windparksteuerung kann die Entscheidung getroffen werden kann, jede einzelne Windenergieanlage entsprechend zu steuern:

- Statuscodes (System ok, manueller Stopp, Alarm, Warnung, ...),
- Leistung,
- Windgeschwindigkeit,
- Windrichtung,
- Daten von Zustandsüberwachungssystemen einzelner Komponenten, wie z.B. Flügel, Getriebe, Generatoren, Umrichter, etc.
- alle verfügbaren Daten, die sich auf den Zustand der Windkraftanlage und ihrer Komponenten beziehen, wie z.B. Temperatur, Druck, Strom, Last,...

Darüber hinaus kann der Windparksteuerung die folgenden Eingangsparameter als Zustandsparameter oder zusätzliche Daten, automatisch oder manuell, zur Verfügung gestellt werden:

- Wetter-/Windvorhersage (Minute, Stunde, Tag, Monat, Jahr)
- Aktuell erzielbarer Preis / kWh
- Grad / Schweregrad der Defekte an Windenergieanlagen- und WP-Komponenten mit Angaben zu den Kosten für die Reparatur. Ggf. mit Angabe der Höhe des Versicherungsselbstbehaltes.
- Einschätzung der Restnutzungsdauer der (defekten) Komponenten
- Relevanz der Komponente für die Betriebsfähigkeit und Stabilität der Windenergieanlage sowie die HSE Relevanz (z.B. Außentemperatursensor = geringe Relevanz; Rotorblatt = sehr hohe Relevanz)
- Parkkonfiguration einschließlich ermittelter Abschattungsverluste, möglicher Turbulenzen und Einflüsse von anderer Hindernisse (Wald, Hügel, ...)
- Zeitpunkt und Dauer von manuellen Abschaltungen, wie z.B. Wartung, Inspektion etc.
- Vertraglich festgelegte Steuerungsparameter und Toleranzen des Netzbetreibers.

Alle diese Eingangsparameter können einer prozentualen Bewertung / Gewichtung unterzogen werden, so dass jede Windkraftanlage individuell und abhängig von dem jeweiligen Anlagenzustand geregelt werden kann. Unter a) bis e) werden beispielhafte Regelungsalgorithmen beschrieben.

a) Bei älteren Windkraftanlagen oder Windkraftanlagen mit höherer Gesamtbetriebszeit und/oder bereits generierter Gesamtenergieleistung, steigen insbesondere die Stromgestehungskosten, da die Wahrscheinlichkeit von Komponentenverschleiß und/oder -ausfall mit zunehmendem Alter und/oder Belastung steigen. Diese können daher mit einem höheren Belastungsfaktor eingestuft werden als jüngere Windkraftanlagen oder Windkraftanlagen mit geringerer generierter Gesamtenergieleistung.

b) Bei Windkraftanlagen oder Windpark-Komponenten (z.B. Stromkabel, Hochspannungstransformatoren) mit Problemen oder Defekten innerhalb der Komponenten steigen insbesondere die Stromgestehungskosten, da die Wahrscheinlichkeit eines Ausfalls dieser Komponenten steigt und damit mögliche Servicekosten entstehen oder zukünftige Erträge aufgrund von Ausfallzeiten der Komponenten verringert werden könnten. Die Höhe der erhöhten Stromgestehungskosten kann von verschiedenen Parametern abhängen, wie bereits beschrieben wurde:

- Grad / Schwere des Defekts.
- Relevanz der Komponente für die Funktionsfähigkeit und Stabilität der Windenergieanlage (z.B. Außentemperatursensor = geringe Relevanz; Rotorblatt = sehr hohe Relevanz)
- Wartungskonzept des Betreibers.
- Versicherungskonzept des Betreibers.

Der Belastungsfaktor einer solchen Windkraftanlage kann höher sein.

c) Bei Windkraftanlagen, die erhöhten Turbulenzen ausgesetzt sind (permanent oder temporär, z.B. abhängig von der Windrichtung) können auch die Stromgestehungskosten steigen. Hintergrund: Bei höheren Turbulenzen steigen die Belastungen für die Komponenten der Windkraftanlage und damit die Wahrscheinlichkeit einer Verkürzung der Lebensdauer der Komponenten, was zu höheren Servicekosten und einer Verringerung des Energieertrags der Windkraftanlage aufgrund von Abschaltungen zur Wartung/Reparatur führen kann. Der Belastungsfaktor einer solchen Windkraftanlage kann höher sein.

d) In Windparks mit verschiedenen Typen von Windkraftanlagen kann es zu unterschiedlichen Ausfallraten der einzelnen Windkraftanlagen- oder Komponententypen kommen. Bei Windkraftanlagen-Typen mit Komponenten mit einer statistisch höheren Ausfallrate, können auch die Stromgestehungskosten höher sein entsprechend ihrer höheren Ausfallrate. Der Belastungsfaktor einer solchen Windkraftanlage kann höher sein.

e) Abhängig von den vertraglich festgelegten Regelparametern und Toleranzen des Netzbetreibers hinsichtlich der Reaktionszeit und der Regelungsgrenzen sowie eventuell fälliger Vertragsstrafen bei Nichteinhaltung können die Regelzeit und der Regelwert durch die Windparksteuerung optimiert werden.

Die Vorteile der Anmeldung sind insbesondere:

- Maximierung des Ertrages bzw. Reduzierung des Energieverlustes / Gewinns.
- Erhöhung des LCoE unter Berücksichtigung des technischen Zustands der einzelnen Windkraftanlage.
- Verbesserung der Möglichkeit, Regelenergie an den Markt zu liefern.

**Patentansprüche**

1. Verfahren zum Betreiben eines mit einem externen Stromnetz (114) verbindbaren Windparks (100), wobei der Windpark (100) zumindest eine erste Windkraftanlage (102.1) und eine zweite Windkraftanlage (102.2) umfasst, das Verfahren umfassend:

   - Bereitstellen einer Mehrzahl von Zustandsparametern der ersten Windkraftanlage (102.1) des Windparks (100),
   - Bereitstellen einer Mehrzahl von Zustandsparametern der zweiten Windkraftanlage (102.2) des Windparks (100),
   - Generieren eines ersten Belastungsfaktors der ersten Windkraftanlage (102.1), basierend auf den bereitgestellten Zustandsparametern der ersten Windkraftanlage (102.1),
   - Generieren eines zweiten Belastungsfaktors der zweiten Windkraftanlage (102.2), basierend auf den bereitgestellten Zustandsparametern der zweiten Windkraftanlage (102.2),
   - Erhalten einer Leistungsanpassungsinstruktion, enthaltend zumindest eine vorgegebene maximal zulässige Gesamtleistung des Windparks (100), und
   - Anpassen der durch den Windpark (100) generierten Gesamtleistung durch Anpassen der ersten durch die erste Windkraftanlage (102.1) generierten Einzel-Leistung, basierend auf dem generierten ersten Belastungsfaktor, und durch Anpassen der zweiten durch die zweite Windkraftanlage (102.2) generierten Einzel-Leistung, basierend auf dem generierten zweiten Belastungsfaktor, derart, dass die durch dem Windpark (100) in das externe Stromnetz (114) eingespeiste Leistung die vorgegebene maximal zulässige Gesamtleistung nicht überschreitet, und **gekennzeichnet durch**
   - zusätzliches Bereitstellen eines Bauteilzustandsparameters eines mit einer der Windkraftanlagen (102.1. 102.2) verbundenen Bauteils (112) des Windparks (100), und
   - Generieren des Belastungsfaktors der mit dem Bauteil (112) verbundenen Windkraftanlage (102.1. 102.2) zusätzlich basierend auf dem Bauteilzustandsparameter.

2. Verfahren nach Anspruch 1, **dadurch gekennzeichnet, dass**

   - das Anpassen der durch den Windpark (100) generierten Gesamtleistung ein Anpassen der generierten Gesamtleistung des Windparks (100) um einen Leistungsanpassungsgesamtwert umfasst,
   - wobei der Leistungsanpassungsgesamtwert auf einen ersten Einzel-Leistungsanpassungswert der ersten Windkraftanlage (102.1) und einen zweiten Einzel-Leistungsanpassungswert der zweiten Windkraftanlage (102.2) aufgeteilt wird,
- wobei die Aufteilung auf dem ersten Belastungsfaktor und dem zweiten Belastungsfaktor basiert.

3. Verfahren nach Anspruch 1 oder 2, **dadurch gekennzeichnet, dass**

- der Windpark (100) drei oder mehr Windkraftanlagen (102.1. 102.2, 102.3, 102.4, 102.5) umfasst,
- wobei für jede Windkraftanlage (102.1. 102.2, 102.3, 102.4, 102.5) eine jeweilige Mehrzahl von Zustandsparametern erfasst wird,
- wobei für jede Windkraftanlage (102.1. 102.2, 102.3, 102.4, 102.5) ein jeweiliger Belastungsfaktor generiert wird, jeweils basierend auf den jeweils erfassten Zustandsparametern,
- wobei ein Anpassen der durch den Windpark (100) generierten Gesamtleistung durch ein Anpassen der jeweiligen Einzel-Leistung sämtlicher Windkraftanlagen des Windparks (100) erfolgt, jeweils basierend auf den jeweiligen Belastungsfaktoren, derart, dass die durch dem Windpark (100) in das externe Stromnetz (114) eingespeiste Leistung die vorgegebene maximal zulässige Gesamtleistung nicht überschreitet.

4. Verfahren nach einem der vorherigen Ansprüche, **dadurch gekennzeichnet, dass**

- das verbundene Bauteil ein Energiekabel ist, und das Verfahren ferner umfasst:
- Erfassen, durch einen Bauteilsensor, des Bauteilzustandsparameters,
- wobei das Erfassen des Bauteilzustandsparameters ein Erfassen einer Kabeltemperatur des Energiekabels durch einen Temperatursensor umfasst.

5. Verfahren nach einem der vorherigen Ansprüche, **dadurch gekennzeichnet, dass**

- die Mehrzahl von Zustandsparametern zumindest einen Statuscode einer Windkraftanlage (102.1. 102.2, 102.3, 102.4, 102.5) umfasst,
- wobei ein Statuscode insbesondere einen Parameterwert aufweist, ausgewählt aus der Gruppe, umfassend "Anlage in Ordnung", Stopp der Anlage, Alarm und Warnung.

6. Verfahren nach einem der vorherigen Ansprüche, **dadurch gekennzeichnet, dass**

- die Mehrzahl von Zustandsparametern zumindest einen an einer Windkraftanlage (102.1. 102.2, 102.3, 102.4, 102.5) vorhandenen meteorologischen Parameter umfasst,
- wobei der meteorologischen Parameter eine Windgeschwindigkeit ist, und/oder
- wobei der meteorologischen Parameter eine Windrichtung ist.

7. Verfahren nach einem der vorherigen Ansprüche, **dadurch gekennzeichnet, dass**

- die Mehrzahl von Zustandsparametern mindestens einen Komponentenzustandsparameter einer Windkraftanlage (102.1. 102.2, 102.3, 102.4, 102.5) umfasst,
- wobei der mindestens eine Komponentenzustandsparameter ausgewählt ist aus der Gruppe, umfassend mindestens einen Rotorzustandsparameter, mindestens einen Getriebezustandsparameter, mindestens einen Generatorzustandsparameter, mindestens einen Umrichterzustandsparameter, mindestens einen Steuerungszustandsparameter, mindestens einen Triebstrangzustandsparameter und mindestens einen Turmzustandsparameter.

8. Verfahren nach einem der vorherigen Ansprüche, **dadurch gekennzeichnet, dass**

- die Mehrzahl von Zustandsparametern zumindest einen
Windparkpositionsparameter einer Windkraftanlage (102.1. 102.2, 102.3, 102.4, 102.5) umfasst.

9. Verfahren nach einem der vorherigen Ansprüche, **dadurch gekennzeichnet, dass**

- jedem Zustandsparameter ein Gewichtungsfaktor zugeordnet ist, und
- das Generieren eines Belastungsfaktors auf der Mehrzahl von Zustandsparametern und den jeweiligen Gewichtungsfaktoren basiert,

10. Verfahren nach Anspruch 9, **dadurch gekennzeichnet, dass**

- ein Gewichtungsfaktor eines Statuscodes größer ist als ein Gewichtungsfaktor eines meteorologischen Parameters, und/oder

- ein Gewichtungsfaktor eines meteorologischen Parameters größer ist als ein Gewichtungsfaktor eines Komponentenzustandsparameters, und/oder

- ein Gewichtungsfaktor eines Komponentenzustandsparameters größer ist als ein Gewichtungsfaktor eines Windparkpositionsparameters.

**11.** Verfahren nach einem der vorherigen Ansprüche, **dadurch gekennzeichnet, dass**

- das Generieren eines Belastungsfaktors auf der Mehrzahl von Zustandsparametern und zusätzlich auf mindestens einem vorhergesagten meteorologischen Parameter an einer Windkraftanlage (102.1. 102.2, 102.3, 102.4, 102.5) basiert.

**12.** Verfahren nach einem der vorherigen Ansprüche, **dadurch gekennzeichnet, dass**

- die Leistungsanpassungsinstruktion die vorgegebene maximal zulässige Gesamtleistung des Windparks (100) und einen vorgegebenen Anpassungszeitpunkt enthält, ab der die in das externe Stromnetz (114) durch den Windpark (100) eingespeiste Leistung die vorgegebene maximal zulässige Gesamtleistung des Windparks (100) einhalten muss,

- Bestimmen des durch den Windpark (100) einzuhaltenden Leistungstoleranzbands der vorgegebene maximal zulässigen Gesamtleistung,

- Bestimmen des durch den Windpark (100) einzuhaltenden Zeittoleranzbands des vorgegebenen Anpassungszeitpunkts, und

- Durchführen des Anpassens der durch den Windpark (100) generierten Gesamtleistung unter Ausnutzung des Zeittoleranzbands und des Leistungstoleranzbands.

**13.** Verfahren nach einem der vorherigen Ansprüche, **dadurch gekennzeichnet, dass**

- wenn die vorgegebene maximal zulässige Gesamtleistung null ist, der interne Energiebedarf des Windparks (100) bestimmt wird,

- wobei das Anpassen der durch den Windpark (100) generierten Gesamtleistung erfolgt, zusätzlich basierend auf dem bestimmten internen Energiebedarf und einem vorgegebenen Energiekriterium.

**14.** Computerprogramm mit Instruktionen, die bewirken, dass ein Computer einer Windparksteuerung eines Windparks das Verfahren nach Anspruch 1 ausführt.

**15.** Windpark (100), insbesondere Offshore-Windpark (100), umfassend:

- zumindest eine erste Windkraftanlage (102.1) und eine zweite Windkraftanlage (102.2),

- mindestens einen Windparkanschluss (110) zum Anschließen des Windparks (100) an ein externes Stromnetz (114),

- mindestens eine Windparksteuerung (104) eingerichtet zum:

- Generieren eines ersten Belastungsfaktors der ersten Windkraftanlage (102.1), basierend auf bereitgestellten Zustandsparametern der ersten Windkraftanlage (102.1),

- Generieren eines zweiten Belastungsfaktors der zweiten Windkraftanlage (102.2), basierend auf erfassten Zustandsparametern der zweiten Windkraftanlage (102.2),

- Erhalten einer Leistungsanpassungsinstruktion mit einer vorgegebenen maximal zulässigen Gesamtleistung des Windparks (100), und

- Anpassen der durch den Windpark (100) generierten Gesamtleistung durch Anpassen der ersten durch die erste Windkraftanlage (102.1) generierten Einzel-Leistung, basierend auf dem generierten ersten Belastungsfaktor, und durch Anpassen der zweiten durch die zweite Windkraftanlage (102.2) generierten Einzel- Leistung, basierend auf dem generierten zweiten Belastungsfaktor, derart, dass die durch dem Windpark (100) in das externe Stromnetz (114) eingespeiste Leistung die vorgegebene maximal zulässige Gesamtleistung nicht überschreitet, **dadurch gekennzeichnet, dass** die Windparksteuerung (104) eingerichtet ist zum:

- zusätzlichen Bereitstellen eines Bauteilzustandsparameters eines mit einer der Windkraftanlagen (102.1. 102.2) verbundenen Bauteils (112) des Windparks (100), und

- Generieren des Belastungsfaktors der mit dem Bauteil (112) verbundenen Windkraftanlage (102.1. 102.2) zusätzlich basierend auf dem Bauteilzustandsparameter.

**Claims**

1. Method for operating a wind farm (100) connectable to an external power grid (114), wherein the wind farm (100) comprises at least a first wind turbine (102.1) and a second wind turbine (102.2), the method comprising:

    - providing a plurality of state parameters of the first wind turbine (102.1) of the wind farm (100),
    - providing a plurality of state parameters of the second wind turbine (102.2) of the wind farm (100),
    - generating a first load factor of the first wind turbine (102.1) based on the provided state parameters of the first wind turbine (102.1),
    - generating a second load factor of the second wind turbine (102.2) based on the provided state parameters of the second wind turbine (102.2),
    - obtaining a power adjustment instruction containing at least a predetermined maximum permissible total power of the wind farm (100), and
    - adjusting the total power generated by the wind farm (100) by adjusting the first individual power generated by the first wind turbine (102.1) based on the generated first load factor, and by adjusting the second individual power generated by the second wind turbine (102.2) based on the generated second load factor such that the power fed into the external power grid (114) by the wind farm (100) does not exceed the predetermined maximum permissible total power, and **characterized by**
    - additionally providing a component state parameter of a component (112) of the wind farm (100) connected to one of the wind turbines (102.1, 102.2), and
    - generating the load factor of the wind turbine (102.1, 102.2) connected to the component (112) additionally based on the component state parameter.

2. Method according to claim 1, **characterized in that**

    - adjusting the total power generated by the wind farm (100) comprises adjusting the total power generated by the wind farm (100) by a total power adjustment value,
    - wherein the total power adjustment value is divided into a first individual power adjustment value of the first wind turbine (102.1) and a second individual power adjustment value of the second wind turbine (102.2),
    - wherein the division is based on the first load factor and the second load factor.

3. Method according to claim 1 or 2, **characterized in that**

    - the wind farm (100) comprises three or more wind turbines (102.1, 102.2, 102.3, 102.4, 102.5),
    - wherein a respective plurality of state parameters is detected for each wind turbine (102.1, 102.2, 102.3, 102.4, 102.5),
    - wherein a respective load factor is generated for each wind turbine (102.1, 102.2, 102.3, 102.4, 102.5) based on the respective detected state parameters,
    - wherein an adjusting of the total power generated by the wind farm (100) is adjusted by adjusting the respective individual power of all wind turbines of the wind farm (100) based on the respective load factors such that the power fed into the external power grid (114) by the wind farm (100) does not exceed the predetermined maximum permissible total power.

4. Method according to one of the previous claims, **characterized in that**

    - the connected component is an energy cable, and the method further comprises:
    - detecting, by a component sensor, the component state parameter,
    - wherein detecting the component state parameter comprises detecting a cable temperature of the power cable by a temperature sensor.

5. The method according to any of the preceding claims, **characterized in that**

    - the plurality of state parameters comprises at least one state code of a wind turbine (102.1, 102.2, 102.3, 102.4, 102.5),

- wherein a state code comprises, in particular, a parameter value selected from the group comprising "turbine OK", turbine stop, alarm, and warning.

6. Method according to one of the previous claims, **characterized in that**

- the plurality of state parameters comprises at least one meteorological parameter present at a wind turbine (102.1, 102.2, 102.3, 102.4, 102.5),
- wherein the meteorological parameter is a wind speed, and/or
- wherein the meteorological parameter is a wind direction.

7. Method according to one of the preceding claims, **characterized in that**

- the plurality of state parameters comprises at least one component state parameter of a wind turbine (102.1, 102.2, 102.3, 102.4, 102.5),
- wherein the at least one component state parameter is selected from the group comprising at least one rotor state parameter, at least one gearbox state parameter, at least one generator state parameter, at least one converter state parameter, at least one control state parameter, at least one drive train state parameter, and at least one tower state parameter.

8. Method according to one of the previous claims, **characterized in that**

- the plurality of state parameters comprises at least one wind farm position parameter of a wind turbine (102.1, 102.2, 102.3, 102.4, 102.5).

9. Method according to one of the preceding claims, **characterized in that**

- a weighting factor is assigned to each state parameter, and
- the generating of a load factor is based on the plurality of state parameters and the respective weighting factors.

10. Method according to claim 9, **characterized in that**

- a weighting factor of a state code is greater than a weighting factor of a meteorological parameter, and/or
- a weighting factor of a meteorological parameter is greater than a weighting factor of a component state parameter, and/or
- a weighting factor of a component state parameter is greater than a weighting factor of a wind farm position parameter.

11. Method according to one of the preceding claims, **characterized in that**

- the generating of a load factor is based on the plurality of state parameters and additionally on at least one predicted meteorological parameter at a wind turbine (102.1, 102.2, 102.3, 102.4, 102.5).

12. Method according to one of the preceding claims, **characterized in that**

- the power adjustment instruction contains the predetermined maximum permissible total power of the wind farm (100) and a predetermined adjustment time point from which the power fed into the external power grid (114) by the wind farm (100) must comply with the predetermined maximum permissible total power of the wind farm (100),
- determining the power tolerance band of the predetermined maximum permissible total power to be complied with by the wind farm (100),
- determining the time tolerance band of the predetermined adjustment time point to be complied with by the wind farm (100), and
- performing the adjusting of the total power generated by the wind farm (100) using the time tolerance band and the power tolerance band.

13. Method according to one of the previous claims, **characterized in that**

- if the predetermined maximum permissible total power is zero, the internal energy requirement of the wind farm (100) is determined,

- wherein the total power generated by the wind farm (100) is adjusted additionally based on the determined internal energy requirement and a predetermined energy criterion.

14. Computer program with instructions that cause a computer of a wind farm control system of a wind farm to execute the method according to claim 1.

15. Wind farm (100), in particular, an offshore wind farm (100), comprising:

- at least a first wind turbine (102.1) and a second wind turbine (102.2),
- at least one wind farm connection (110) for connecting the wind farm (100) to an external power grid (114),
- at least one wind farm control system (104) configured to:

- generate a first load factor of the first wind turbine (102.1) based on provided state parameters of the first wind turbine (102.1),
- generate a second load factor of the second wind turbine (102.2) based on detected state parameters of the second wind turbine (102.2),
- obtain a power adjustment instruction with a predetermined maximum permissible total power of the wind farm (100), and
- adjust the total power generated by the wind farm (100) by adjusting the individual power generated by the first wind turbine (102.1) based on the generated first load factor, and by adjusting the second individual power generated by the second wind turbine (102.2) based on the generated second load factor such that the power fed into the external power grid (114) by the wind farm (100) does not exceed the predetermined maximum permissible total power, **characterized in that** the wind farm control system (104) is configured to:
- additionally provide a component state parameter of a component (112) of the wind farm (100) connected to one of the wind turbines (102.1, 102.2), and
- generate the load factor of the wind turbine (102.1, 102.2) connected to the component (112) additionally based on the component state parameter.

**Revendications**

1. Méthode pour exploiter un parc éolien (100) raccordable à un réseau électrique externe (114), où le parc éolien (100) comprend au moins une première éolienne (102.1) et une deuxième éolienne (102.2), la méthode comprenant :

- fournir une pluralité de paramètres d'état de la première éolienne (102.1) du parc éolien (100),
- fournir une pluralité de paramètres d'état de la deuxième éolienne (102.2) du parc éolien (100),
- générer un premier facteur de charge de la première éolienne (102.1) basé sur des paramètres d'état fournis de la première éolienne (102.1),
- générer un deuxième facteur de charge de la deuxième éolienne (102.2) sur la base des paramètres d'état fournis de la deuxième éolienne (102.2),
- obtenir une instruction d'ajustement de puissance contenant au moins une puissance totale maximale admissible prédéfinie du parc éolien (100), et
- ajuster la puissance totale générée par le parc éolien (100) en ajustant la première puissance individuelle générée par la première éolienne (102.1) basé sur le premier facteur de charge généré, et en ajustant la deuxième puissance individuelle générée par la deuxième éolienne (102.2) basé sur le deuxième facteur de charge généré, de telle sorte que la puissance injectée par le parc éolien (100) dans le réseau électrique externe (114) ne dépasse pas la puissance totale maximale admissible prédéfinie, et **caractérisé par**
- fournir en outre un paramètre d'état de composant d'un composant (112) du parc éolien (100) connecté à l'une des éoliennes (102.1, 102.2), et
- générer le facteur de charge de l'éolienne (102.1, 102.2) reliée au composant (112) en plus basé sur le paramètre d'état du composant.

2. Méthode selon la revendication 1, **caractérisé en ce que**

- l'ajustement de la puissance totale générée par le parc éolien (100) comprend un ajustement de la puissance totale générée par le parc éolien (100) par une valeur totale d'ajustement de puissance,
- où la valeur totale d'ajustement de puissance est répartie entre une première valeur d'ajustement de puissance individuelle de la première éolienne (102.1) et une deuxième valeur d'ajustement de puissance individuelle de la deuxième éolienne (102.2),
- où la répartition est basée sur le premier facteur de charge et le deuxième facteur de charge.

3. Méthode selon la revendication 1 ou 2, **caractérisé en ce que**

- le parc éolien (100) comprend trois éoliennes (102.1, 102.2, 102.3, 102.4, 102.5) ou plus,
- où une pluralité respective de paramètres d'état est enregistrée pour chaque éolienne (102.1, 102.2, 102.3, 102.4, 102.5),
- où un facteur de charge respectif est généré pour chaque éolienne (102.1, 102.2, 102.3, 102.4, 102.5), respectivement basé sur des paramètres d'état respectifs enregistrés,
- où l'ajustement de la puissance totale générée par le parc éolien (100) est effectuée en ajustant la puissance individuelle respective de toutes les éoliennes du parc éolien (100), sur la base des facteurs de charge respectifs, de telle sorte que la puissance injectée par le parc éolien (100) dans le réseau électrique externe (114) ne dépasse pas la puissance totale maximale admissible prédéfinie.

4. Méthode selon l'une des revendications précédentes, **caractérisé en ce que**

- le composant connecté est un câble d'énergie, et la méthode comprend en outre :
- détecter, par un capteur de composant, du paramètre d'état de composant,
- où la détection du paramètre d'état du composant comprend und détection d'une température du câble d'alimentation par un capteur de température.

5. Méthode selon l'une des revendications précédentes, **caractérisé en ce que**

- la pluralité de paramètres d'état comprend au moins un code d'état d'une éolienne (102.1, 102.2, 102.3, 102.4, 102.5),
- où un code d'état présente en particulier une valeur de paramètre choisie dans le groupe comprenant « installation en ordre », arrêt de l'installation, alarme et avertissement.

6. Méthode selon l'une des revendications précédentes, **caractérisé en ce que**

- la pluralité de paramètres d'état comprend au moins un paramètre météorologique présent sur une éolienne (102.1, 102.2, 102.3, 102.4, 102.5),
- où le paramètre météorologique est une vitesse du vent, et/ou
- où le paramètre météorologique est une direction de vent.

7. Méthode selon l'une des revendications précédentes, **caractérisé en ce que**

- la pluralité de paramètres d'état comprend au moins un paramètre d'état de composant d'une éolienne (102.1, 102.2, 102.3, 102.4, 102.5),
- où l'au moins un paramètre d'état de composant est sélectionné parmi le groupe comprenant au moins un paramètre d'état de rotor, au moins un paramètre d'état de transmission, au moins un paramètre d'état de générateur, au moins un paramètre d'état de convertisseur, au moins un paramètre d'état de commande, au moins un paramètre d'état de chaîne cinématique et au moins un paramètre d'état de tour.

8. Méthode selon l'une des revendications précédentes, **caractérisé en ce que**

- la pluralité de paramètres d'état comprend au moins un paramètre de position de parc éolien d'une éolienne (102.1, 102.2, 102.3, 102.4, 102.5).

9. Méthode selon l'une des revendications précédentes, **caractérisé en ce que**

- un facteur de pondération est attribué à chaque paramètre d'état, et
- la génération d'un facteur de charge est basée sur la pluralité de paramètres d'état et les facteurs de pondération respectifs,

10. Méthode selon la revendication 9, **caractérisé en ce que**

- un facteur de pondération d'un code d'état est supérieur à un facteur de pondération d'un paramètre météorologique, et/ou
- un facteur de pondération d'un paramètre météorologique est supérieur à un facteur de pondération d'un paramètre d'état de composant, et/ou
- un facteur de pondération d'un paramètre d'état de composant est supérieur à un facteur de pondération d'un paramètre de position de parc éolien.

**11.** Méthode selon l'une des revendications précédentes, **caractérisé en ce que**

- la génération d'un facteur de charge est basée sur la pluralité de paramètres d'état et en outre sur au moins un paramètre météorologique prévu au niveau d'une éolienne (102.1, 102.2, 102.3, 102.4, 102.5).

**12.** Méthode selon l'une des revendications précédentes, **caractérisé en ce que**

- l'instruction d'ajustement de puissance comprend la puissance totale maximale admissible prédéfinie du parc éolien (100) et un moment d'ajustement prédéfini à partir duquel la puissance injectée dans le réseau électrique externe (114) par le parc éolien (100) doit respecter la puissance totale maximale admissible prédéfinie du parc éolien (100),
- déterminer la bande de tolérance de puissance de la puissance totale maximale admissible prédéfinie à respecter par le parc éolien (100),
- déterminer la bande de tolérance temporelle de le moment d'ajustement spécifiée à respecter par le parc éolien (100), et
- effectuer l'ajustement de la puissance totale générée par le parc éolien (100) en utilisant la bande de tolérance temporelle et la bande de tolérance de puissance.

**13.** Méthode selon l'une des revendications précédentes, **caractérisé en ce que**

- lorsque la puissance totale maximale admissible prédéfinie est nulle, la demande énergétique interne du parc éolien (100) est déterminée,
- où l'l'ajustement de la puissance totale générée par le parc éolien (100) est effectué en outre basé sur la demande énergétique interne déterminée et d'un critère énergétique prédéfini.

**14.** Programme informatique comprenant des instructions qui effectuent qu'un ordinateur d'un système de commande de parc éolien exécute la méthode selon la revendication 1.

**15.** Parc éolien (100), en particulier parc éolien offshore (100), comprenant :

- au moins une première éolienne (102.1) et une deuxième éolienne (102.2),
- au moins un raccordement de parc éolien (110) pour raccorder le parc éolien (100) à un réseau électrique externe (114),
- au moins une commande de parc éolien (104) configurée pour :

  - générer un premier facteur de charge de la première éolienne (102.1) sur la base des paramètres d'état fournis de la première éolienne (102.1),
  - générer un deuxième facteur de charge de la deuxième éolienne (102.2) sur la base de paramètres d'état enregistrés de la deuxième éolienne (102.2),
  - obtenir une instruction d'ajustement de puissance avec une puissance totale maximale admissible prédéfinie du parc éolien (100), et
  - ajuster la puissance totale générée par le parc éolien (100) en ajustant la première puissance individuelle générée par la première éolienne (102.1) sur la base du premier facteur de charge généré, et en ajustant la deuxième puissance individuelle générée par la deuxième éolienne (102.2) sur la base du deuxième facteur de charge généré, de telle sorte que la puissance injectée par le parc éolien (100) dans le réseau électrique externe (114) ne dépasse pas la puissance totale maximale admissible prédéfinie, **caractérisé en ce que** la commande du parc éolien (104) est configurée pour :
  - fournir en plus un paramètre d'état de composant d'un composant (112) du parc éolien (100) relié à l'une des éoliennes (102.1, 102.2), et
  - générer le facteur de charge de l'éolienne (102.1, 102.2) reliée au composant (112) basé en outre sur le paramètre d'état du composant.

Fig.1

EP 4 245 988 B1

Fig.2

**IN DER BESCHREIBUNG AUFGEFÜHRTE DOKUMENTE**

**In der Beschreibung aufgeführte Patentdokumente**

- US 2013038060 A1